(19) Europäisches Patentamt
European Patent Office
Office européen des brevets

(11) Numéro de publication : **0 023 161**
**B1**

(12) **FASCICULE DE BREVET EUROPÉEN**

(45) Date de publication du fascicule du brevet : **13.07.83**

(51) Int. Cl.³ : **C 05 F 1/00**, A 23 K 1/04

(21) Numéro de dépôt : **80400685.6**

(22) Date de dépôt : **16.05.80**

(54) **Procédé de modification des caractéristiques physiques et biochimiques du sang d'animaux après abattage, appareillage pour l'application du procédé, produits industriels obtenus et applications dérivées.**

(30) Priorité : **29.04.80 FR 8009664**
**24.07.79 FR 7919047**
**16.05.79 FR 7912397**

(43) Date de publication de la demande :
**28.01.81 Bulletin 81/04**

(45) Mention de la délivrance du brevet :
**13.07.83 Bulletin 83/28**

(84) Etats contractants désignés :
**BE CH DE GB IT LI LU NL SE**

(56) Documents cités :
**FR A 496 514**
**FR A 592 150**
**FR A 1 382 451**
**FR A 1 442 376**
**FR A 2 374 271**
**FR A 2 400 328**
**GB A 938 583**
**GB A 1 204 686**
**US A 3 291 612**

(73) Titulaire : **Balsse, Christian**
**623 Chemin de la Planette Aussone**
**F-31700 Blagnac (FR)**

**Doux, Camille**
**Chemin de Papou Beauzelle**
**F-31700 Blagnac (FR)**

**Tastet, Jean**
**5 Allée des Sapins**
**F-33700 Merignac (FR)**

(72) Inventeur : **Balsse, Christian**
**623 Chemin de la Planette Aussone**
**F-31700 Blagnac (FR)**
Inventeur : **Doux, Camille**
**Chemin de Papou Beauzelle**
**F-31700 Blagnac (FR)**
Inventeur : **Tastet, Jean**
**5 Allée des Sapins**
**F-33700 Merignac (FR)**

(74) Mandataire : **Chenard, René Marcel**
**57 rue de Clichy**
**F-75009 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 023 161 B1

Jouve, 18, rue St-Denis, 75001 Paris, France

Procédé de modification des caractéristiques physiques et biochimiques du sang d'animaux après abattage, appareillage pour l'application du procédé, produits industriels obtenus et applications dérivées

Il est connu que la majeure partie du sang provenant de l'abattage industriel des animaux de boucherie n'est pas récupérée, faute d'un moyen économique permettant sa transformation sous une forme qui le rende aisément transportable et qui soit peu coûteux en énergie nécessaire à la transformation. Si l'on tient compte de la récupération qui est pratiquée, notamment en vue de l'alimentation humaine, sur 60 % du sang de porc et, pour divers autres usages, sur 30 % du sang de bovin pour diverses applications industrielles, la quantité totale de sang qui n'est pas actuellement collectée est, par exemple en France, voisine de cent mille tonnes par an, ce qui représente 70 % environ du volume total de sang disponible au niveau des abattoirs.

Le sang ainsi non récupéré industriellement est alors, le plus fréquemment, rejeté avec les eaux usées, or :

— il est polluant et putrescible et, lorsqu'il est effectué, le traitement d'un litre de sang en station d'épuration revient environ à 16 centimes (évaluation faite pour l'année 1977).

— par contre, il est riche en matières nobles et, tout spécialement, en protéines qui sont ainsi perdues, voire détruites sans aucun profit.

Il est clair que le bilan de cette opération est totalement négatif, tant sur le plan strictement économique que sur celui de l'alimentation humaine au niveau duquel le déficit global en protéines est devenu très important alors que la récupération des protéines contenues dans le sang d'abattoirs est de nature à permettre soit leur recyclage par leur utilisation pour l'alimentation animale ou à titre d'engrais pour l'agriculture, soit éventuellement, leur utilisation directe pour le cadre de l'alimentation humaine.

En dehors des procédés bien connus d'utilisation directe du sang dans le cadre des industries de la charcuterie (boudin) et de la conserve, les différents traitements envisageables en vue de sa transformation, tels qu'ils sont actuellement connus, font appel aux techniques suivantes :

1. séparation ou concentration en deux phases par un moyen physique ou mécanique.
2. conservation par le froid.
3. déshydratation.

Ces divers traitements nécessitent tous la mise en œuvre d'un appareillage complexe et onéreux et le recours à une quantité considérable d'énergie. Leurs diverses modalités sont brièvement rappelées ci-dessous avec l'indication de leur coût de revient ci-après donné de façon approximative sous la simple dénomination « coût ». Ce coût se rapporte à un litre de sang traité dans le cadre d'un abattage annuel total de l'ordre de 20 000 tonnes de carcasses d'animaux par unité de traitement, ce tonnage correspond approximativement à 1 000 000 de litres de sang.

Au prix ci-dessous, il convient d'ajouter environ 5 centimes par litres de sang traité (hypothèse d'une collecte effectuée par véhicule citerne à partir de cinq abattoirs) dans tous les cas ou la nature même du procédé mis en œuvre ne suppose pas le traitement du sang sur les lieux mêmes de l'abattage.

a) Séparation centrifuge de sang alimentaire fraichement récolté : coût 5,6 centimes/litre

b) congélation en pains de sang entier frais : coût : 14,5 centimes/litre

c) congélation en paillettes de plasma de qualité alimentaire : coût 33 centimes/litre

d) séchage en cuiseur de sang entier frais ou stocké avec phase de stérilisation vers 125 °C puis déshydratation sous vide à 45 °C ; coût 22,4 centimes/litre

e) séchage en cuiseur avec préconcentration de sang entier frais ou stocké : coût 18,9 centimes/litres

f) séchage par atomisation avec ou sans concentration préalable de sang entier frais ou stocké :
1. coût sans concentration : 83,30 centimes/litre
2. coût avec concentration : 82,8 centimes/litre

— séchage à billes, de sang entier frais ou stocké : coût 54,1 centimes/litre

h) concentration par ultrafiltration ou par osmose inverse
1. coût de la transformation du plasma en paillettes congelées : 40 centimes/litre
2. coût de la transformation du plasma en poudre : 600 centimes/litre
3. coût de la transformation du sang en farine : 300 centimes/litre

La technique connaît également les procédés suivants :

i) procédé Reprocom de coagulation d'un sang stocké par injection de vapeur dans la masse puis passage au filtre rotatif.

j) déshydratation sur cylindre Hatmaker de sang entier non alimentaire par séchage sur rouleaux rotatifs à 140 °C.

k) stérilisation-déshydratation par micro-ondes de sang alimentaire ou non, par concentration sous vide puis stérilisation et séchage en farine par micro-ondes.

Les coûts de production indiqués ci-dessus tiennent compte de la rémunération et de l'amortissement des frais d'équipement afférents aux matériels de production. Ces frais d'investissement peuvent, pour une unité de traitement telle que définie ci-dessus, représenter de 250 000 francs à 3 000 000 de francs (tous les coûts ci-dessus s'appliquent à l'année 1977).

En vue de remédier aux inconvénients des procédés connus et tenant, selon le procédé considéré, soit à la nécessité d'effectuer le traitement sur les lieux mêmes de l'abattage, soit à l'importance de la dépense énergétique à mettre en œuvre, soit à l'importance des capitaux à immobiliser pour la construction des équipements, l'invention concerne un procédé simplifié de modification des caractéristiques physiques et bio-chimiques du sang d'animaux après abattage ou du sérum plasma de celui-ci après séparation, remarquable en ce qu'il consiste à chauffer le sang à l'état liquide avant coagulation, ou son plasma ou sérum après séparation, jusqu'à une température correspondant sensiblement à son état d'ébullition tout en lui appliquant une agitation lente et continue, puis à arrêter l'opération lorsque le sang, plasma ou sérum a acquis une consistance grumeleuse correspondant à une coagulation en l'état, avec disparition sensiblement totale de la phase liquide.

Par ailleurs, en vue de permettre la conservation du sang sur les lieux d'abattage entre ces collectes périodiques, le procédé est de préférence remarquable en ce qu'il consiste à ajouter au sang, dès la saignée, un agent anti-coagulant et de préférence également un agent bactéricide. Il a été constaté expérimentalement que les meilleurs résultats étaient obtenus avec l'utilisation de l'acide éthylène-diamine-tétra-acétique (EDTA) ou de l'un de ses dérivés basiques tels que l'EDTA disodique (EDTA $Na_2$) qui assure une conservation satisfaisante du sang en phase liquide par retard de développement bactérien pendant une période d'environ 10 jours, puis de soumettre au traitement thermique défini ci-dessus le sang ainsi conservé.

Il a été constaté que la proportion pondérale d'EDTA $Na_2$ à ajouter au sang dès la saignée pour lui assurer comme il vient d'être dit une bonne conservation en phase liquide pendant une dizaine de jours, était sensiblement de 0,50 %, la durée de 10 jours étant considérée comme suffisante pour satisfaire aux conditions d'un ramassage périodique.

Le sang ainsi conservé, puis transporté sur les lieux de traitement est alors chauffé en masse progressivement sous agitation lente et continue destinée à assurer l'homogénéïté du phénomène de transformation sans toutefois éliminer la fibrine qui contient elle-même des protéines qui seraient perdues si l'agitation était trop forte et que cette fibrine venait à se séparer. Le traitement ainsi défini est poursuivi jusqu'au voisinage de la température d'ébullition.

La réaction de transformation en phase grumeleuse débute vers 80-85 °C et se termine vers 95-100 °C, température qui, à la pression normale, correspond à l'entrée en ébullition du sang. Dans les conditions où ont été menées les expérimentations, un délai de 15 à 20 secondes s'est écoulé entre le début de la réaction et la transformation totale qui est réalisée à la température d'ébullition. A partir de ce moment, il n'est plus nécessaire de maintenir l'apport calorique puisque la transformation totale ou sensiblement totale est alors réalisée.

On constate alors que l'on a obtenu une phase grumeleuse de couleur marron foncé (analogue à du marc de café, bien que présentant une granulation apparente plus grosse) ; cette phase grumeleuse est stable, humide et ne tache pas les doigts.

La perte de poids ne dépasse pas 5 %, elle est constituée d'une part, par l'évaporation et d'autre part, par la présence d'un léger « rendu » liquide qui ne présente aucun inconvénient car, comme il sera vu plus loin, ce rendu est repris lors du traitement de la « cuvée » suivante sans qu'il y ait accumulation des « rendus » successifs.

Dès après obtention de la phase grumeleuse telle qu'elle vient d'être définie et afin d'éviter tout début de prolifération bactérienne à l'intérieur de la masse ainsi portée à haute température, le contenu de la cuve de traitement est de préférence refroidi rapidement, par exemple en le déversant en couche mince sur une bande transporteuse qui défile à une vitesse appropriée à l'aplomb du point de déversement ; la bande est aménagée de manière telle qu'à son extrémité opposée, le sang traité soit revenu sensiblement à la température ambiante.

Le sang en phase grumeleuse stable et humide ainsi obtenu peut être stocké soit à l'air libre en vrac, soit dans des sacs en matière plastique, de préférence scellés ; il peut être ainsi conservé avant utilisation pendant une période de plusieurs mois sans qu'aucune prolifération bactérienne ne commence à apparaître.

En effet, il convient de constater qu'un effet de synergie se produit, du point de vue bactéricide entre l'EDTA $Na_2$ et le traitement thermique final du procédé qui vient d'être décrit. Cet effet de synergie est mis en évidence par la double constation suivante :

— en l'absence de traitement thermique, la dose de 0,5 % d'EDTA $Na_2$ assure au sang non coagulé un état de retard de prolifération bactérienne pendant une période d'environ 10 jours au-delà de laquelle la prolifération bactérienne s'élève extrêmement rapidement.

— par ailleurs, si l'on soumet le sang sans addition d'EDTA $Na_2$ et alors qu'il est encore en grande partie en phase liquide (ce qui suppose alors que le traitement thermique est appliqué immédiatement après la saignée), l'on ne réalise qu'une pasteurisation classique d'effet très limité dans le temps du fait de l'oxydation due à l'air ambiant.

Il a paru intéressant de donner ici une tentative d'explication de cette synergie au retard à la

prolifération au niveau de la phase grumeleuse. En effet, celle-ci constitue un milieu humide de nature organique, au sein duquel il se produit donc des modifications ou transformations bio-chimiques internes au contact de l'air ambiant ; ces modifications ou transformations déterminent la libération de certains des oligo-éléments contenus dans la phase grumeleuse, au fur et à mesure qu'elle se produit ; cependant ces oligo-éléments ne deviennent pas disponibles pour un métabolisme cellulaire qui autoriserait la prolifération bactérienne puisque l'EDTA $Na_2$ libre va les complexer (chélater), privant ainsi la flore bactérienne des éléments de nature à lui permettre de réaliser ce métabolisme.

Bien entendu, cette hypothèse n'est valable que si l'on suppose que le traitement thermique de mise en phase grumeleuse est appliqué avant que la totalité de l'EDTA $Na_2$ ait été utilisée à la chélation de la phase liquide.

En effet, la dose minimale d'EDTA susceptible de déterminer le début de l'anticoagulation ainsi que l'a établi l'expérimentation, est de 0,05 % du volume de sang de saignée considéré. A 0,02 ou 0,03 % il n'y a pas de début d'anticoagulation. Par contre aux environs de 0,1 % l'anti-coagulation est totale. Si le traitement thermique est alors appliqué, il reste 0,40 % environ d'EDTA pour assurer, pendant la période de plusieurs mois indiquée ci-dessus, le retard à la prolifération dans la phase grumeleuse.

Cependant il est également possible que le retard à la prolifération soit dû, au moins pour partie, au fait que le motif éthylène ($CH_2CH_2$) dont les propriétés bactéricides sont connues, est présent dans la structure moléculaire de l'EDTA.

Il a été également constaté que l'on obtenait des résultats comparables à ceux exposés ci-dessus lorsque l'on associe 0,45 % d'EDTA $Na_2$ à 0,05 % d'EDTA $CaNa_2$.

Il a été cependant constaté que les résultats étaient nettement moins bons qu'avec l'utilisation du seul EDTA $Na_2$.

Pour la clarté de l'exposé, il est rappelé que les formules développées de l'EDTA $Na_2$ et d'EDTA $CaNa_2$ sont respectivement :

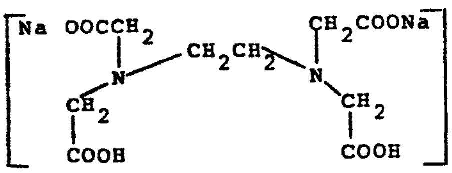

et

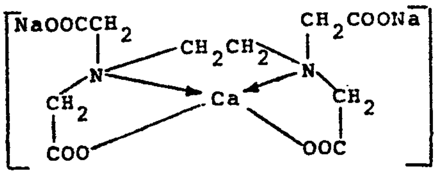

Il a cependant été constaté qu'en vue d'obtenir la conservation du sang en phase liquide avec retard du développement bactérien avant son utilisation, par exemple dans le cadre d'un traitement thermique en vue de sa transformation en phase grumeleuse, si les meilleurs résultats sont effectivement actuellement obtenus avec l'utilisation de l'acide éthylène diamine tétra acétique (EDTA) ou de l'un de ses deux dérivés basiques tels que l'EDTA disotique (EDTA $Na_2$), il était cependant possible de le remplacer par l'un des autres agents complexants (ou chélatants) quelconques actuellement connus, soit sous leur forme acide, soit sous forme de leurs sels. L'on obtient alors des résultats analogues, avec divers degrés de perfection qui, selon l'utilisation envisagée pour le produit final, peuvent être considérés comme suffisants.

Parmi ces autres complexants, l'on peut citer, en sus de l'EDTA et de l'EDTA $Na_2$ mentionnés ci-dessus, tous les autres sels de l'EDTA, tels que les sels d'Aluminium ou de Magnésium, ainsi que les autres complexants connus tel que, notamment :

— l'acide éthylène diamino dio hydroxylphényl acétique (EDDHA) ou ses sels
— l'acide nitrilotriacétique ou ses sels
— l'acide 1-2 diamino cyclohexane N,N,N',N' tétra acétique ou ses sels.

Des résultats analogues sont également obtenus en associant un complexant, dérivé ou non de l'EDTA, à un acide, à une base, ou à un sel, en raison de l'activation, qui a été expérimentalement constatée, de la chélation par l'adjonction de tel ou tel de ces trois derniers éléments.

Dans le cas où l'on veut réduire la proportion d'EDTA à ajouter, si cela est jugé préférable, par exemple dans le cadre de l'utilisation du sang ainsi traité pour l'alimentation humaine, il est possible de synergiser l'action de l'EDTA alors utilisé à dose réduite (par exemple 0,1 %) ou de tout autre complexant, par l'adjonction d'un acide, d'une base ou d'un sel. En effet, il a été constaté expérimentalement que ces trois groupes d'éléments constituaient des activateurs de la chélation.

Il est, par exemple, possible d'utiliser du bisulfite de sodium qui présente un certain pouvoir bactéricide et une hydrolyse alcaline, donc avec libération d'ions hydroxydes. En ce qui concerne les acides, on peut également utiliser l'acide cirtique qui est connu pour ses propriétés anticoagulantes, voire de ses propriétés secondaires d'agent conservateur.

Il est évident que, dans ce cas, le retard à la prolifération bactérienne sera moins bon. Cependant, cela ne présente pas d'inconvénient dès lors qu'il est possible de faire intervenir le traitement thermique dans de très courts délais. Par ailleurs, s'agissant d'une utilisation dans le cadre de l'alimentation humaine, il peut être envisagé de procéder à une stérilisation de la phase grumeleuse obtenue, ainsi que

la possibilité en a été mentionnée ci-dessous.

Le procédé qui vient d'être exposé ci-dessus permet de réaliser la récupération intégrale du sang dans tous les abattoirs avec suppression de toutes les nuisances actuellement constatées soit à l'abattoir, soit sur les lieux de traitement. Il permet de supprimer tout rejet liquide par la transformation d'une phase liquide colloïdale en une phase solide grumeleuse microbiologiquement stable qui peut être stockée, puis évacuée à tout moment, par exemple avec les matières stercoraires, ce qui permet de réduire les taux de pollution.

Cependant, le produit fini, qui peut être conservé pendant plusieurs mois, est très riche en éléments protéiques car il n'y a qu'une faible dénaturation de tels éléments par rapport au sang de la saignée, du fait du faible apport calorique total nécessaire à la transformation. Il présente donc, dans le cadre des différentes applications industrielles qui seront exposées ci-après une valeur marchande importante, alors qu'il convient de rappeler que dans l'état actuel des choses, un abattoir doit payer pour qu'on lui collecte le sang.

Par ailleurs, le procédé de traitement défini ci-dessus n'entraine aucun effluent à éliminer et une certaine nuisance olfactive qui apparaît au cours du traitement peut être écartée par l'emploi de charbons activés ou tourbes au-dessus des cuves de traitement.

Par ailleurs, il a également été mis au point un procédé d'enrichissement de la phase grumeleuse en protéines consistant soit à coaguler, soit à centrifuger un volume supplémentaire de sang liquide, à broyer le caillot ou la masse de globules et plaquettes ainsi obtenu, puis à incorporer le broyat ainsi obtenu au sang anticoagulé et enfin, à soumettre celui-ci au traitement thermique de mise en phase grumeleuse.

Le sérum ou le plasma obtenu après les opérations de coagulation ou de centrifugation sont moins riches en protéines que le caillot ou la masse de plaquettes obtenu. Ils peuvent cependant, être également incorporés à du sang pour mise en phase grumeleuse comme il vient d'être dit ; ladite phase grumeleuse résultante est alors relativement pauvre en phase grumeleuse comme il vient d'être dit ; ladite phase grumeleuse résultante est alors relativement pauvre en protéines ; elle peut cependant être affectée à l'une des applications décrites au présent brevet.

Il est clair que dans tous les cas le prix de revient est très faible puisque, d'une part, les cuves de traitement thermique constituent un matériel simple à réaliser du fait que le traitement a lieu à l'air libre sans qu'aucune précaution spéciale n'ait a être prise et que, d'autre part, le coût d'exploitation est, en dehors des frais de transport, essentiellement constitué par celui de l'énergie thermique à mettre en œuvre pour simplement porter le sang à son point d'ébullition. Cette énergie thermique peut être estimée à 72 000 kilo-calories pour 1 000 litres de sang alors que dans l'exemple des traitements actuels classiques en autocuiseur exposés ci-dessus, la dépense énergétique est de l'ordre de 880 000 kilo-calories pour 1 000 litres de sang ; c'est-à-dire que, par rapport à ce procédé, l'économie d'énergie réalisée est de l'ordre de 90 %. L'on réalise donc ainsi une dépollution au moindre coût.

Dans la description qui va suivre, il sera donné un exemple de transformation du sang en phase grumeleuse faisant appel à un cycle continu d'opérations à partir de l'apport de sang en phase liquide, anticoagulé comme il a été dit ci-dessus.

Le sang ainsi stabilisé par mise en phase grumeleuse selon le procédé décrit ci-dessus perd son caractère de résidu polluant et peut être utilisé directement pour l'alimentation des animaux en raison de l'appétence du coagulat obtenu. C'est ainsi par exemple qu'il peut intervenir dans le cadre de l'alimentation d'engraissement des porcs sur la base de 25 à 30 % de la ration journalière à un taux d'humidité globale d'environ 15 %.

Il peut également être envisagé comme adjuvant dans le cadre de l'alimentation humaine. Il doit être précisé à ce sujet que la phase grumeleuse stable et humide obtenue selon le procédé peut éventuellement être portée à 120 °C en autoclave. Une opération menée dans ces conditions pendant 20 minutes a établi que le sang ainsi traité conservait le même aspect que le produit de départ.

En fait l'opération ci-dessus décrite de mise en phase grumeleuse peut être définie comme une coagulation d'un type particulier.

Il est ainsi possible de faire adsorber ou tout au moins purifier par des sciures, des tourbes ou tout autre adsorbant, les effluents chargés de l'abattoir ou de toute autre industrie agroalimentaire. On incorpore le tout au sang grumeleux et dans tous ces cas, l'on obtient des substances à grande valeur fertilisante.

Par incorporation au sang ainsi transformé en phase grumeleuse, de fumiers broyés, de boues de station d'épuration, de sciures, de tourbes, de sables, de terres franches, de terreaux, d'argiles gonflantes, de minéraux expansés, de matières humides et d'engrais, on peut obtenir soit des engrais organiques, soit des amendements organiques, soit des substrats horticoles. Le pric de revient de ces produits est intéressant puisqu'il élimine les opérations industrielles coûteuses de broyage et de formulation granulée.

A titre d'exemple concret, lorsque l'on veut confectionner un engrais, on ajoute au sang qui contient de l'azote, de l'acide phosphorique et de la potasse tous deux sous forme pulvérulente. On a ainsi réalisé un engrais naturel complet.

Ces divers produits comportant du sang en phase grumeleuse de couleur marron foncé, épandus à la surface du sol, jouent d'abord un rôle physique de première importance par une libération retardée des

éléments fertilisants du sang, une plus grande surface d'adsorption et une grande porosité et en augmentant le pouvoir calorifique du sol et protégeant ce dernier contre l'évaporation excessive et contre les méfaits des fortes pluies. Enfin en libérant progressivement les principes fertilisants du sang par altération biologique normale, ils jouent leur rôle chimique de substances fertilisantes.

Il est à remarquer que le sérum a, lui aussi, comme le sang, la propriété de coaguler à la chaleur de la même manière que ci-dessus. Il en est de même pour le plasma.

Donc toutes les applications que nous venons de voir pour le sang, soit dans un but de dépollution, soit dans un but de production d'un substrat fertilisant, peuvent aussi s'appliquer au sérum et au plasma.

Le coagulat du sang seul est également appétant pour les animaux, même après autoclavage prolongé si cela est jugé utile (4 h. à 120 °C par exemple).

Le sang est alors à la base d'aliments pour le bétail, les animaux domestiques et les animaux sauvages.

Ce coagulat appétant peut aussi servir de support pour l'ingestion, par les animaux, de produit médicamenteux.

Il peut être à la base d'appats pour poissons, pour rats et nématodes après incorporation dans ces deux derniers cas de substances raticides ou nématicides.

La présente invention a aussi pour objet de préciser qu'il est possible de procéder à la dessication du sang préalablement transformé en phase grumeleuse.

En effet, cette dessication de la phase grumeleuse humide conduit à un produit qui est également grumeleux, granulé et qui n'est pas pulvérulent.

La dessication peut être réalisée en soumettant la phase grumeleuse à un traitement thermique ou simplement à l'air libre, avec ou sans ventilation.

Ce nouveau produit desséché, noirâtre et grumeleux d'aspect, est très différent du sang desséché ordinaire obtenu par les moyens classiques. En effet, le sang desséché ordinaire se présente sous la forme d'une poudre marron très fine, très pulvérulente, qui peut se compacter malencontreusement dans les trémies de stockage et qui peut également être mise en suspension par le moindre courant d'air.

Il est donc clair que le sang desséché à partir de la phase grumeleuse est différent de la poudre de sang classique sur le plan de la couleur, mais aussi et essentiellement sur le plan de la texture et de la densité apparente.

Les comportements physiques du sang ainsi traité, lors de son utilisation, seront donc différents de ceux du sang desséché selon les procédés classiques, qu'il s'agisse par exemple d'un épandage aux champs ou d'un transit forcé dans une conduite ou un pulvérisateur.

Il en est de même dans le cas d'une ingestion par les animaux ; en effet, l'ingestion de sang en poudre ou en farines, donc de produits pulvérulents, occasionnent des accidents pulmonaires fréquents ; or, ce nouveau produit sec et grumeleux élimine ce risque. Il peut être administré seul ou en association à d'autres produits alimentaires de complément.

Enfin, il a été constaté qu'une modification des propriétés physiques, telles que rhéologiques des boues, coulis, bétons, ou mortiers et telles que de densité ou de porosité pour les boues, pâtes pour produits réfractaires, mortiers et bétons destinés à être soumis à la cuisson était obtenue en mélangeant à ces divers produits le sang coagulé en phase grumeleuse tel qu'il a été décrit ci-dessus dans sa consistance et dans son procédé de fabrication.

Le nouvel état conféré au sang par application du procédé ci-dessus a été défini dans une première approche autant qu'il pouvait l'être par la simple observation visuelle. Selon cette définition, le nouveau produit se présente comme une phase grumeleuse de couleur marron foncé, analogue à du marc de café bien que présentant une granulation plus grosse, cette phase grumeleuse étant stable, humide et ne tachant pas les doigts.

En vue de donner à cette définition un caractère plus précis, des observations ont été faites à la loupe binoculaire et les macrophotographies ont été faites dans ces conditions. Il a ainsi été constaté que, sous un grossissement de 30 fois environ, la phase grumeleuse se présentait comme un agrégat de nodules plus ou moins isolés, adhérents entre eux, formant ainsi des masses de dimension millimétrique (approximativement 0,5 mm à 2 mm).

Cependant, l'observation attentive de ces nodules de forme quelque peu irrégulière a montré qu'ils étaient eux-mêmes constitués par un agglomérat de granules beaucoup plus petits et d'apparence sphéroïdale.

Par ailleurs, les observations effectuées, dans les mêmes conditions, sur du sang coagulé à la chaleur, sans agitation lente, ont confirmé le fait, déjà connu, que ce sang coagule alors en une masse homogène assez analogue à ce qui est désigné en matière culinaire comme un « flan » ; cette masse qui nécessite un démoulage et qui peut être facilement coupée au couteau sera ci-après désignée par l'expression « structure flan » par souci de simplification.

Afin de mieux mettre en évidence les différences entre la structure grumeleuse et la structure flan, on a eu recours à un microscope à balayage de marque JEOL type J.S.M.-U3 assisté d'un système EDAX (Energy Dispersive Analysis of X-Rays), lui-même assisté d'un ordinateur susceptible de traiter les données et de les mettre en mémoire.

Il est ici rappelé que le système EDAX permet ainsi, par simple interrogation par bombardement électronique, sous vide très poussé, d'un échantillon à analyser, d'obtenir instantanément par analyse du

spectre énergétique de rayonnement X diffusé de ce fait, la composition, en corps simples, de la couche superficielle de cet échantillon, dans l'ordre de la classification de Mendeleïev en abscisses, par un tracé de symbolisation conventionnelle fournissant, en ordonnées, les proportions relatives desdits corps simples. Le rappel, sur l'écran de visualisation, et selon une symbolisation différente, des caractéristiques d'un précédent échantillon de composition non identique précédemment mises en mémoire, permet de souligner les différences respectives de teneur pour tous les corps simples de la Nature. L'analyse concerne une épaisseur de la partie superficielle de l'échantillon qui peut varier, d'une façon générale, de 0,1 μm à plusieurs μm, selon la tension d'accélération des particules qui est appliquée à l'appareil ; la présence d'un corps déterminé se traduit sur l'écran par une sorte de « pic » dont la hauteur est liée à la quantité dudit corps contenue dans le volume analysé de l'échantillon et l'ordinateur permet de calculer la valeur numérique de l'intégrale du pic correspondant.

Il sera compris que les clichés obtenus au microscope électronique à balayage sont de reproduction difficile dans le cadre des procédés graphiques autorisés en matière de brevets d'invention. Il peut cependant être indiqué que ces clichés réalisés pour chacun des deux échantillons de structure flan et de structure grumeleuse, respectivement aux grossissements × 30, × 300, × 1000 et × 5000 et sans déplacement d'échantillon, ont pleinement confirmé les clichés obtenus en macrophotographie.

C'est-à-dire que le sang de structure grumeleuse montre une hétérogranulométrie caractéristique et une structure générale de type « agrégat ».

Aucune confusion n'est possible avec la structure flan, coupable au couteau ; dans ce dernier cas, et quelque soit le grossissement, il s'agit manifestement d'une structure compacte continue et homogène. Au grossissement × 1 000 la surface est très faiblement ondulée sans qu'apparaisse aucun début de résolution de cette surface pratiquement uniforme qui correspond en fait à l'aspect de gel de la structure flan, à la seule exception de quelques fissures, en dehors de la partie centrale du cliché effectué, analogues à celles, de plus grande dimension, que l'on peut constater à l'œil nu sur une telle structure flan ou gel. Par contre, au grossissement × 5 000 pour lequel seule est concernée une plage exempte de fissure, l'image de surface est pratiquement uniforme.

Il en est tout autrement de l'échantillon de structure grumeleuse pour lequel notamment les clichés à × 1 000 et × 5 000 font nettement apparaitre la granulométrie de ladite structure. parfaitement mesurable et dans laquelle les formations sphéroïdales de sang grumeleux peuvent être appréciées comme présentant un diamètre de l'ordre de 1 à 5 microns.

Une explication peut être donnée de ce phénomène non encore décrit ni mis en application en ce qui concerne les possibilités d'applications industrielles qu'il implique.

En effet, l'état d'agitation lente dans lequel est maintenu le sang dès le début du traitement thermique a pour effet de mettre la matière en un état de division qui, pour que son état d'équilibre thermodynamique soit conservé, engendre des particules sphéroïdales soumises aux lois de la tension interfaciale ou de la tension superficielle qui ne sont que deux aspects d'un même phénomène.

De façon plus précise, ladite matière constituée par le sang, s'organise physiquement en cet état.

Or, le sang contenant des protéines, et tout spécialement le plasma, ces particules coagulent en cet état de division et de façon irréversible sous l'action de la chaleur à laquelle elles sont soumises dans le même temps.

L'attention doit ici être attirée sur un certain nombre de facteurs qui favorisent et/ou déterminent cette coagulation sous forme de particules sphéroïdales de très faible diamètre. En effet :

— le sang n'est aucunement une solution homogène puisqu'il est constitué par un milieu liquide colloïdal qui contient en suspension les « éléments figurés » du sang, c'est-à-dire des globules de différentes natures tels que les hématies et les leucocytes, de même que des fragments de cellules qui sont les plaquettes sanguines, ces éléments, également de nature colloïdale, étant assimilables à des pseudo-solides par rapport au pseudo-liquide constitué par le plasma. Il est donc normal que l'agitation lente, appliquée, selon l'invention, au sang, favorise la mise de celui-ci en état de division.

— il est connu que les colloïdes constituant les éléments figurés du sang présentent une tension superficielle supérieure à celle du plasma puisque, notamment, ils sont parfaitement « mouillés » par ce dernier, sans, pour autant, lui être miscibles.

— il est également connu que la tension superficielle du sérum du sang, qui n'est autre que du plasma (80 gr. de protéines par litre), qui a perdu son fibrogène (4 gr. par litre) à la suite de la formation du caillot des éléments figurés, est très faible à la température ambiante. Elle est, selon les « tables scientifiques » « Documenta GEIGY » ($6^{ème}$ édition page 654) de 57 à 58 dynes/Cm à la température de 16-18 °C. En outre, les mêmes tables notent qu'elle s'abaisse à 47 dvnes/cm. à la température de 37 °C. La mesure de la tension superficielle du plasma, peu différente de celle du sérum en raison de leur teneur très voisine en protéines identiques, n'a pas été faite dans le cadre de la présente invention qui présente essentiellement un caractère industriel. Sans que l'on ait à formuler une hypothèse sur le profil de la courbe de variation de cette tension superficielle du plasma, en fonction de sa température, il est cependant évident que pour la température voisine de 80 °C pour laquelle on constate dans les conditions du mode opératoire indiqué, le commencement de la transformation du sang liquide en structure grumeleuse, qu'après que le plasma soit passé de 37 °C à 80 °C la tension superficielle du plasma a atteint une valeur beaucoup plus faible encore.

— ceci explique que l'état de division créé par l'agitation lente du sang donne naissance, selon les

lois de la tension superficielle, à des formations sphéroïdales qui, pour la température voisine de 80 °C où se réalise la coagulation des protéines, présentent le diamètre extrêmement petit qui a pu être mesuré sur les clichés obtenus au microscope électronique.

Il doit être précisé que, par agitation lente, il faut entendre une agitation qui ne détermine pas, selon un processus connu, la transformation du fibrinogène du sang en fibrine, ce qui aurait pour effet d'encrasser des appareillages de traitement et de déterminer la perte de 4 % de la teneur plasmatique en protéines puisque le fibrinogène est lui-même une protéine.

Bien entendu, au cours de la transformation en structure grumeleuse, il se produit un phénomène de collage plus ou moins accusé entre certaines des particules voisines, ce qui explique la formation de nodules de grosseur plus ou moins importante eux-mêmes reliés, pour les mêmes raisons, dans une structure générale de type agrégat.

Il doit être toutefois compris que cette structure générale est de cohésion relativement faible, ce qui explique que l'ensemble apparaît finalement comme une réunion d'agrégats plus ou moins importants, indépendants les uns des autres et qui se comportent sensiblement à la manière d'un marc de café, c'est-à-dire que cet ensemble grumeleux peut être versé, transvasé ou épandu sans la moindre difficulté. Il en est évidemment tout au contraire de la structure flan, qui, après démoulage hors du récipient où l'on a effectué sa coagulation, nécessiterait au moins un broyage pour parvenir à un résultat quelque peu analogue.

Encore convient-il de souligner que la relative faiblesse de liaison par collage encore les micro-particules sphéroïdales élémentaires de la structure grumeleuse qui vient d'être définie ci-dessus, aboutit à une aptitude très supérieure à la transformation bio-chimique par les agents extérieurs, par exemple lorsque ladite structure est utilisée comme engrais par épandage ou encore à une grande aptitude à la dispersion lorsqu'a titre d'autres exemples, elle est utilisée comme adjuvant dans le cadre de la fabrication de pâte de ciment ou de produits analogues ou de pâtes destinées à être soumises à une cuisson.

Ainsi, les constatations, d'aspects à première vue purement scientifiques, par lesquelles a débuté le présent exposé, se révèlent en fait d'une très grande importance du point de vue industriel, non seulement en ce qui concerne la possibilité ou facilité de manipulation du sang transformé en phase ou structure grumeleuse, qu'en ce qui concerne son comportement du point de vue de la possibilité des transformations bio-chimiques par lesquelles peut se concrétiser son action ultérieure et également en ce qui concerne la possibilité de sa dispersion dans le cadre de son utilisation comme adjuvant par exemple d'une fabrication de pâte de ciment ou similaire.

En ce qui concerne l'utilisation comme engrais ou adjuvant d'engrais, il faut remarquer que la coagulation sous forme de particules élémentaires de très faible diamètre favorise la bio-transformation de la structure grumeleuse sans pour autant supprimer complètement un certain effet de retard qui est toujours favorable dans de telles utilisations.

En ce qui concerne l'utilisation comme adjuvant dans la fabrication des pâtes telles que les pâtes de ciment il a été constaté que la présence, dans la proportion de 1 % environ, de sang en structure grumeleuse dans de telles pâtes de ciment a pour effet, d'une part, de supprimer la formation de bulles d'air sphériques de diamètre important de l'ordre de 1 à 5 millimètres qui apparaissent dans les procédés connus et sont des facteurs de moindre résistance à la rupture par l'importance des vides qu'elles déterminent, et à l'inverse, de favoriser une micro-porosité desdites pâtes au sein desquelles apparaissent des micro-cavités de répartition pratiquement uniforme au sein de la pâte, et qui, observées au microscope électronique après rupture d'une éprouvette témoin apparaissent comme présentant une surface interne d'aspect irrégulier et une dimension de l'ordre de 1/100 de mm. à 5/100 de mm. avec présence exceptionnelle de quelques cavités, atteignant au maximum 10/100 de mm.

Sans que les causes de cette modification de structure des pâtes de ciment (qui s'étend également aux bétons qui en comportent), aient pu être scientifiquement mises en évidence à ce jour, il semble que lesdites causes résident dans la modification des conditions de tension superficielle et de tension interfaciale dues à la présence, au sein de la pâte de ciment, de sang dont on sait que la tension superficielle est de l'ordre de 57 dynes/cm. à la température de 18 °C. Par ailleurs, l'on sait que cette tension superficielle s'abaisse encore avec une élévation de température, ce qui est le cas dans le cadre de la réaction de prise du ciment dont l'on sait qu'elle est nettement exothermique.

L'utilisation de sang ainsi transformé en structure grumeleuse entraine effectivement sur les pâtes de ciment, d'importantes modifications de comportement tant avant qu'après la solidification de celui-ci et dont il sera rendu compte ci-après, au cours de l'analyse des mesures comparatives qui ont été effectuées.

Les caractéristiques de l'invention qui n'ont pas encore été mises en évidence dans l'exposé qui précède seront bien comprises à la lecture de la description qui va suivre faite en référence aux dessins annexés dans lesquels :

la figure 1 est une vue schématique d'un appareillage de traitement thermique du sang selon l'invention, faisant appel à un cycle continu d'opérations.

les figures 2, 3, 4, 5, 6 et 7 représentent, deux à deux, la structure flan et la structure grumeleuse photographiées au microscope électronique, respectivement sous les grossissements × 30, × 300 et × 1 000,

la figure 8 montre de même la structure grumeleuse sous le grossissement × 5 000,

la figure 9 représente le tracé obtenu à l'appareil EDAX, des compositions chimiques respectives des couches superficielles respectives de la structure flan et de la structure grumeleuse,

la figure 10, un graphe des courbes de vitesse de prise d'une pâte de ciment pour trois éprouvettes dont une éprouvette témoin, une éprouvette contenant 1,5 % de sang transformé en structure grumeleuse et une éprouvette contenant 1,5 % de sang lyophilisé et

la figure 11 un tableau traduisant, sous forme numérique les principales constatations qui peuvent être déduites de la figure 10.

A la figure 1, l'appareillage comporte essentiellement un élévateur à vis d'Archimède disposé en position inclinée, à la partie inférieure duquel est amené le sang liquide préchauffé à environ 60 °C.

Ainsi que le montre la figure, l'élévateur est constitué schématiquement de la manière suivante :

Le sang anticoagulé et préalablement préchauffé approximativement à 60 °C par exemple sur un réchauffeur à plaques schématisé en 1 dans lequel il est introduit en 2 à une température de 15 à 20 °C par exemple, est déversé par l'orifice 3 dans un bac 20 dans lequel plonge l'extrémité inférieure d'un organe cylindrique 21 à l'intérieur duquel une vis d'Archimède 22 est entrainée en rotation par un moyen convenable 33.

Des moyens de contrôle, qui n'ont pas été représentés et sont de conception classique, sont aménagés de manière que le liquide ne dépasse pas un niveau maximum qui est matérialisé en 37 sur la figure.

L'organe cylindrique 21 présente deux parois coaxiales déterminant un espace annulaire 23 à l'intérieur duquel peut circuler un fluide porté à température convenable, amené par des orifices d'admission tels que 24, 25 et d'évacuation, non représentés.

L'espace annulaire 23 est en outre, de préférence, divisé radialement par une cloison 26 en deux espaces 23a, 23b, respectivement desservis par les orifices d'entrée 24, 25, de manière à permettre de soumettre le sang à une ambiance thermique de plus en plus élevée au fur et à mesure qu'il va être élevé par la vis d'Archimède de l'orifice d'entrée 27 jusqu'à l'orifice d'évacuation 28 selon une loi de croissance de température qui sera définie ci-après.

De plus, ladite vis d'Archimède présente elle-même une double paroi définissant un volume hélicoïdal 32 à l'intérieur duquel peut circuler un fluide amené à une température de l'ordre de 100 à 110 °C et qui y est introduit de toute manière convenable par exemple au niveau de l'extrémité supérieure 29a de son axe creux 29.

Enfin, à l'aplomb de l'orifice 28 est disposée l'une des extrémités d'une bande transporteuse perméable 34 sous laquelle est aménagée une trémie 35 permettant la récupération du léger rendu liquide qui a été mentionné ci-dessus, dans un bac 30 qui est relié au bac de réception 20 par une canalisation convenable 31 munie d'une vanne 36 et de moyens de pompage 7 aménagés de manière à réintégrer ledit rendu au flux de sang liquide déversé dans le bac 20.

Le dispositif fonctionne de la manière suivante :

Lorsque la vis d'Archimède est entraînée en rotation, elle prend en charge et élève à chaque tour de rotation une certaine quantité du sang anticoagulé contenu dans le bac 20 et elle l'achemine de façon en elle-même bien connue, de l'orifice 27 vers l'orifice 28 et en le maintenant par son mouvement propre, en état d'agitation lente, vers la partie supérieure de l'organe cylindrique 21. Au cours de cette progression, le sang est soumis à l'action de la chaleur provenant, d'une part, du fluide qui circule dans l'espace 23a, puis 23b et, d'autre part, par simple contact avec la vis elle-même, à l'action de la chaleur qui circule dans l'espace hélicoïdal 32. Sa température s'élève donc progressivement.

Par ailleurs, ainsi qu'il a été indiqué ci-dessus, la réaction de transformation en phase grumeleuse débute aux environs de 80 °C et il est souhaitable qu'à partir de cette température la transformation totale du sang en phase grumeleuse soit acquise en un temps très court. En conséquence, il a été jugé préférable d'organiser au voisinage de la partie supérieure de l'organe cylindrique une chambre annulaire 23b séparée de la chambre 23a par la cloison 26 ; dans la chambre 23b est introduit un fluide à température nettement plus élevée que celui qui est introduit dans la chambre 23a, par exemple au voisinage de 120 °C. Il y a lieu de remarquer en outre que la disposition consistant à introduire le fluide à une température du même ordre de grandeur par l'extrémité supérieure de l'espace hélicoïdal de la vis d'Archimède répond à la même condition puisqu'il est bien évident que ce fluide perdra ses calories au fur et à mesure de leur échange avec le sang par l'intermédiaire de la paroi de ladite vis d'Archimède avec laquelle celui-ci est en contact, c'est-à-dire au fur et à mesure de sa progression vers l'extrémité inférieure de cette vis au niveau de laquelle elle s'échappe par des moyens qui n'ont pas été représentés.

Ainsi, lors de son ascension dans la vis d'Archimède, le sang anticoagulé va être progressivement porté, d'une part, aux environ de 80 °C pour laquelle commence la réaction de mise en phase grumeleuse, puis à partir de ce moment et pendant un temps dont la durée peut être déterminée par un choix judicieux de la température d'admission des fluides par des orifices 25 et 29 et/ou par la longueur de la partie 23b de la chambre annulaire 23, jusqu'à la température optimale finale choisie pour ladite mise en phase grumeleuse.

Le sang ainsi mis en phase grumeleuse va donc être déversé au niveau de l'orifice 28 sur l'extrémité du tapis roulant, à partir de laquelle elle sera acheminée vers des moyens d'évacuation aménagés au niveau de l'extrémité opposée.

Il est à remarquer que pour une meilleure compréhension, on a indiqué sur la figure 1 les températures du sang selon les zones considérées.

A la figure 2, établie au microscope électronique JEOL à balayage type J.S.M- U3, la structure flan vue sous un grossissement de × 30 montre que la surface de ladite structure est compacte, continue et homogène (voir notamment la surface référencée 50). Elle est toutefois sillonnée de quelques fissures qui sont parfaitement identifiables, telle que la fissure 51. La surface homogène 50 et la fissure 51 étant situées au centre du cliché pourront être suivies sous les grossissements de × 300 et × 1 000 qui seront utilisés pour les clichés représentés aux figures 4 et 6.

La figure 3 montre sous le même grossissement de × 30 un fragment de structure grumeleuse qui, même sous ce faible grossissement, montre un aspect hétérogène qui sera mis en valeur aux figures 5, 7 et 8, respectivement établies sous les grossissements de × 300, × 1 000 et de × 5 000. On peut toutefois distinguer dès à présent, notamment sur la partie centrale du cliché, la contexture grumeleuse que l'on remarque par exemple dans les zones 52, 53 et 54.

Ainsi, dès la mise en œuvre de ce grossissement extrêmement modeste de × 30, l'on peut remarquer les profondes différences qu'il y a entre la structure flan et la structure grumeleuse. Ces différences vont être de mieux en mieux mises en relief aux figures 4 à 7.

Sur la figure 4, l'on remarque la surface uniforme faiblement ondulée 50 qui a déjà été désignée sous cette même référence à la figure 2, de même que la profonde fissure 51 qui se prolonge vers le bas du cliché par une fissure plus étroite 55.

La différence de cette structure avec la structure grumeleuse représentée à la figure 5 devient alors parfaitement évidente, l'attention devant être portée plus particulièrement sur la zone centrale 56, qui apparaît déjà comme présentant une structure hétérogène au sein d'un grumeau relativement gros qui occupe, en fait, la quasi totalité de la figure 7.

La figure 6 qui reproduit un cliché obtenu à grossissement de × 1 000, confirme les observations qui avaient déjà pu être faites pour la structure flan aux figures 2 et 4 sous les gorssissements de × 30 et de × 300. L'on y retrouve en effet, pratiquement sans modification d'aspect malgré l'augmentation du grossissement, la surface 50 qui présente toujours le même aspect uniforme faiblement ondulé, de même que la fissure 55 est ici particulièrement nette.

Il doit, à propos de cette figure, être remarqué que le cliché apparaît comme parsemé de petits points blancs. Ces points ne sont autres que le phénomène dit de la « neige » bien connu des spécialistes en électronique. Ils ne sauraient en aucune manière être interprétés comme le signe d'une quelconque structure grumeleuse car l'observation visuelle dans les mêmes conditions que celles de la prise du cliché montre qu'ils sont en état de perpétuel mouvement, comme la « neige » bien connue des premiers utilisateurs de récepteurs de télévision. Ce phénomène de « neige » rendra d'ailleurs impossible l'interprétation d'un cliché effectué à grossissement supérieur, car il devient tout à fait prédominant sur l'image, qui ne présente plus pratiquement que des points blancs. C'est la raison pour laquelle aucune représentation de la structure flan à grossissement de × 5 000 n'a été reproduite dans le cadre du présent brevet.

Par contre, au même grossissement que celui utilisé pour la figure 6, soit à × 1 000, la figure 7 montre très distinctement le caractère très particulier de la structure grumeleuse. Ainsi qu'il a été déjà indiqué, la figure 7 représente en effet un agrégat de nodules élémentaires qui y sont déjà tout à fait identifiables. Rien de semblable n'apparaît sur la figure 6 (structure flan) établie à même grossissement.

Il a été possible de pousser le grossissement jusqu'à × 5 000 (figure 8) et les nodules élémentaires sont, sous ce grossissement, parfaitement reconnaissables, par exemple en 57, 58, 59, 60 et 61.

Il est ainsi clairement mis en évidence que la « structure flan » antérieurement bien connue ne présente aucun point de comparaison avec la structure grumeleuse réalisée selon le procédé conforme à l'invention.

Il est d'ailleurs à remarquer qu'une mesure effectuée sur les nodules élémentaires mis en évidence à ladite figure 8 permet de leur attribuer un diamètre de l'ordre de 1 à 2 microns dans les conditions de l'expérimentation représentée.

La différence entre les deux structures est d'ailleurs soulignée par l'analyse chimique de la partie superficielle de chacune d'elles, effectuée à l'aide du dispositif EDAX intégré au microscope électronique utilisé et, bien entendu, sur les mêmes échantillons.

La figure 9 représente le cliché obtenu, sur lequel ont été superposés, par rappel de mémoire à l'aide de l'ordinateur, les tracés correspondant respectivement à la structure flan (courbe enveloppe du tracé en hachures verticales) et à la structure grumeleuse (succession de points éventuellement jointifs).

En outre, l'on a marqué sur le cliché la raie caractéristique K du Silicium (Si) choisi parmi les corps simples constitutifs du sang. Le choix du silicium a été fait en raison de ce qu'il est présent dans le sang complet, mais absent dans le plasma (voir Tables scientifiques Documenta GEIGY, 6ème édition, citées plus haut, page 583).

Sur la figure 9, la ligne du haut est « 79 1740 EV K Z 14 Si ». Elle signifie que, pour poser la ligne verticale de repère référencée 101 sur la figure, l'on a choisi la « fenêtre » 79 (caractéristique interne de l'appareil) qui correspond à l'énergie de 1740 électron-volts qui est celle de la raie caractéristique K de l'élément de numéro atomique Z = 14 qui est le silicium (Si).

Le seconde ligne indique que l'échelle verticale VS (Vertical Scale) est de 2 500 électron-volts par

canal (Channel) ce qui signifie que l'appareil différencie deux éléments dont les raies sont distantes de 20 e-V.

La troisième ligne constitue l'indication en abscisse, des énergies qui y sont représentées (en milliers d'électron-volts).

La quatrième ligne porte de simples indications de service : 7 janvier 1980, échantillon 01-EDAX.

Enfin, il a été ajouté, au dessous de la 4ème ligne, et pour la facilité de l'examen, un abaque matérialisant en clair, par rapport à la ligne 3, la position en abscisse, des principaux corps simples intervenant dans la composition du sang qui correspond aux « énergies suivantes, exprimées en milliers d'électron-volts (énergie X émise) :

| Na | Mg | Al | Si | P | S | Cl | K | Ca |
|---|---|---|---|---|---|---|---|---|
| 1,04 | 1,25 | 1,49 | 1,74 | 2,01 | 2,31 | 2,62 | 3,31 | 3,69 |

L'analyse des résultats peut être effectuée comme suit :

— en premier lieu le très important pic de l'argent, axé sur une valeur légèrement supérieure à 3 000 eV doit être négligé car il est dû à la présence de l'argent de métallisation de surface sans lequel l'observation au microscope à balayage serait impossible.

— en second lieu, il apparaît immédiatement que la composition de la couche superficielle analysée est nettement différente selon que l'on considère la structure flan ou la structure grumeleuse

Cette dernière constatation marque la nette différence qui existe entre les deux structures au sein desquelles les composants élémentaires ne sont pas organisés de la même manière et le sont même selon une répartition différente dans les zones superficielles respectives de ces deux structures.

L'on remarque, notamment, que le silicium ne figure qu'en très faible proportion dans le tracé concernant la structure grumeleuse alors que sa présence est matérialisée par un pic appréciable dans le tracé concernant la structure flan. Or, comme il vient d'être dit, cet élément n'est signalé comme présent que dans le sang total alors qu'il n'est pas décelé dans le plasma (voir Documenta GEIGY cité plus haut). On peut en conclure qu'au contraire de la structure flan, la zone superficielle de la structure grumeleuse est presque uniquement constituée par du plasma.

Dans le cadre d'une application particulière, comme indiqué sommairement ci-dessus, le sang transformé en structure grumeleuse par le procédé conforme à l'invention peut être utilisé de préférence en quantités pondérales de 0,5 à 2 %, en vue de la modification des propriétés rhéologiques des bétons, mortiers ou similaires (boues, boues de forage, coulis). En fait, cette modification affecte, de façon favorable, le comportement de ces bétons ou mortiers aussi bien avant qu'après le phénomène de solidification communément désigné par le terme « prise ». Il sera rendu compte ci-après d'un mode de réalisation comparatif de cet aspect particulier de l'invention. Cet aspect concerne plus particulièrement les pâtes de ciment, mais il est clair que les conclusions sont également applicables aux bétons qui en comportent.

Dans un premier temps, l'on a comparé le comportement d'une pâte de ciment sans aucun ajout et qui sert de témoin, avec celui d'un même ciment comportant un ajout de sang grumeleux, sur la vitesse de prise de pâtes du ciment et sur la résistance mécanique d'éprouvettes confectionnées avec ces pâtes. La même expérience a été effectuée avec une pâte de ciment comportant un ajout de sang en poudre sec obtenu dans une tour d'atomisation (ci-après dénommé « sang lyophilisé »).

Pour cela il a été confectionné des pâtes où le rapport : eau/ciment = 0,264 (soit 87 ml d'eau pour 330 g. de ciment CPA 500) est constant.

Il a été ajouté soit 4,95 g. de sang en structure grumeleuse, soit 4,95 g de sang lyophilisé par essai réalisant ainsi des essais à 1,5 % de sang.

Chaque pâte bien homogénéisée pendant 3 minutes à été moulée dans des boîtes en matière plastique cylindriques de 8 cm de diamètre et 4 cm de hauteur.

A des intervalles de temps de l'ordre de 15 minutes, l'on a mesuré l'enfoncement d'aiguilles normalisées par VICAT (appareil connu sous le nom de sonde de VICAT) :

| | |
|---|---|
| grosse aiguille | diamètre : 10 mm |
| moyenne aiguille | diamètre : 2,5 mm |
| fine aiguille | diamètre : 1,13 mm |

Il est clair qu'à mesure que le temps s'écoule et que la pâte fait prise, on doit utiliser des aiguilles de plus en plus fines pour pouvoir mesurer un enfoncement notable. Pour chaque mesure on calcule

$$\tau_0 \text{ (en g/cm}^{-2}) = 300/\pi \, D \, x$$

où D est le diamètre de l'aiguille en centimètres, et où x est l'enfoncement de l'aiguille en centimètres.

Donc pour une aiguille donnée, plus l'enfoncement est faible, plus $\tau_0$ est élevé.

On porte ces résultats sur un graphe Log-Log :

$$\text{Log } \tau_0 = f \text{ (Log t en minutes)}$$

Ce graphe est représenté à la figure 10 pour chacun des trois échantillons.

Par convention, on considère le début de prise au temps t pour lequel on a $\tau_0$ = 225 g/cm$^2$ avec l'aiguille la plus fine. Sur le graphe ces valeurs sont indiquées par une flèche (↑) sur la courbe (—·——·—).

Mais la comparaison de ces graphes montre aussi d'autres faits très intéressants. D'abord l'enfoncement de la grosse aiguille, qui ne peut s'effectuer que dans une pâte molle ce qui, pour un praticien, représente le domaine d'ouvrabilité ou temps de mise en place de la pâte.

Avec la grosse aiguille (—⊙—⊙—⊙—) l'on observe qu'à 30 minutes la plascitité chiffrée par la valeur de $\tau_0$ est de :

950 pour le témoin
160 pour le lyophilisé à 1,5 %
100 pour le grumeleux à 1,5 %

Ceci prouve que l'adjonction de sang augmente les délais de mise en place du béton, le meilleur résultat étant obtenu pour l'échantillon comportant l'ajout de sang en structure grumeleuse.

De plus si dans tous les cas le sang affecte légèrement le début de prise, on doit noter avec l'expérience « C », faite avec de la poudre de sang séchée, que la prise est très retardée (aplatissement de la courbe). Ceci est un point négatif quand par nécessité on doit envisager un démoulage aussi rapide que possible.

Enfin à 7 jours, il a été procédé à la rupture de ces éprouvettes cylindriques en exerçant la pression suivant le diamètre du cylindre (ou suivant la perpendiculaire à la génératrice du cylindre). Ces essais de rupture sont appelés « essais de fendage brésilien » et sont chiffrés par

$$\sigma_{Br} = 2\ P\ (Kg)/\pi\ d_{(cm)}\ h_{(cm)}$$

où :

P est la tension de rupture à la presse hydraulique en Kg,
d est le diamètre de l'éprouvette en centimètre
h est la hauteur de l'éprouvette en centimètre
$\sigma_{Br}$ est en déca-Newton/cm$^2$ (daN/cm$^2$)
En principe on admet que la tension de cisaillement est alors :

$$\sigma = 0{,}8\ \sigma_{Br}$$

Quelles que soient les critiques ou les réserves que l'on puisse formuler sur de tels essais, toutes choses étant égales par ailleurs, on peut comparer les ruptures à 7 jours.

Les principales valeurs numériques des résultats obtenus font l'objet du tableau de la figure 11.

On remarque alors que le sang en structure grumeleuse accroît la résistance.

Il faut enfin qu'à l'observation l'on constate que le sang a joué un rôle d'« entraîneur d'air » par la disparition de la macroporosité, ainsi qu'il ressort des constatations exposées ci-dessus.

**Revendications**

1. Procédé de modification des caractéristiques physiques et bio-chimiques du sang d'animaux après abattage ou du sérum ou plasma de celui-ci après séparation, caractérisé en ce qu'il consiste à chauffer le sang à l'état liquide avant coagulation ou son plasma ou sérum après séparation, le chauffage étant effectué en masse en applicant à ladite masse de sang ou de plasma ou sérum (ci-après désignée sous l'appellation commune de « sang ») une agitation continue et lente de manière telle que le fibrinogène du sang ne soit pas transformé en fibrine, l'opération de chauffage ainsi définie étant poursuivie de façon progressive jusqu'à une température correspondant sensiblement à la température d'ébullition pour laquelle le sang se présente alors sous forme d'une phase grumeleuse stable et légèrement humide, avec disparition sensiblement totale de toute phase liquide, à l'exception d'un rendu liquide de faible importance dont le poids, ajouté à la perte résultant de l'évaporation, ne détermine pas une perte totale de plus de 5 %.

2. Procédé selon la revendication 1, caractérisé en ce qu'il consiste à ajouter au sang, dès la saignée, un agent anticoagulant, éventuellement associé, dans un but d'activation de la chélation, à un acide, à une base ou à un sel, puis à soumettre ultérieurement au traitement selon la revendication 1, le sang ainsi conservé provisoirement en phase liquide.

3. Procédé selon l'une des revendications 1 ou 2, caractérisé en ce qu'il consiste à ajouter au sang, dès la saignée, un agent bactéricide et/ou retardateur de la prolifération bactérienne.

4. Procédé selon la revendication 3, caractérisé en ce que l'agent anti-coagulant et l'agent bactéricide sont, l'un et l'autre, constitués par l'acide éthylène-diamine-tétra-acétique (EDTA).

5. Procédé selon l'une des revnedications 3 ou 4, caractérisé en ce que l'agent anti-coagulant et

l'agent bactéricide sont l'un et l'autre constitués par l'un des dérivés basiques de l'EDTA.

6. Procédé selon la revendication 5, caractérisé en ce que le dérivé basique de l'EDTA est constitué au moins partiellement par l'EDTA disodique (EDTA $Na_2$).

7. Procédé selon la revendication 5, caractérisé en ce que le dérivé basique de l'EDTA est constitué, au moins partiellement, par l'EDTA disodique monocalcique (EDTA $CaNa_2$).

8. Procédé selon les revendications 6 et 7, caractérisé en ce que le dérivé de l'EDTA est constitué par une association d'EDTA $Na_2$ et d'EDTA $CaNa_2$.

9. Procédé selon l'une des revendications 1 à 8, caractérisé en ce qu'immédiatement après acquisition de la consistance grumeleuse le sang ainsi traité est soumis à un refroidissement rapide approprié à éviter tout début de prolifération bactérienne.

10. Procédé selon la revendication 9, caractérisé en ce que le refroidissement est obtenu par déversement du sang traité sur une bande transporteuse de manière telle qu'il y soit répandu en couche mince, la longueur de la bande étant telle qu'à son extrémité opposée, le sang traité soit revenu sensiblement à la température ambiante.

11. Procédé selon la revendication 1, caractérisé en ce que le rendu liquide est incorporé au sang liquide d'une opération ultérieure de même nature.

12. Procédé selon l'une des revendications 1 à 11, caractérisé en ce que, après obtention de la phase grumeleuse, celle-ci est soumise à un traitement complémentaire de stérilisation effectué en autoclave.

13. Procédé d'enrichissement du sang transformé en phase grumeleuse selon l'une des revendications 1 à 12, consistant soit à coaguler, soit à centrifuger un volume supplémentaire de ce liquide, à broyer le caillot ou la masse de globules et plaquettes ainsi obtenues, puis à incorporer le broyat ainsi obtenu à du sang anticoagulé et enfin à soumettre celui-ci au traitement thermique de mise en phase grumeleuse.

14. Procédé de transformation du sang d'animaux en phase grumeleuse par action de la chaleur selon l'une des revendications 1 à 13, caractérisé en ce qu'il consiste à faire circuler un flux continu dudit sang, initialement en phase liquide, sur un parcours déterminé convenable, à déterminer son élévation progressive de température le long dudit parcours jusqu'au voisinage de la température d'ébullition, à le maintenir en état d'agitation lente jusqu'à ce qu'il ait atteint ladite température pour laquelle il acquiert une consistance grumeleuse, puis à déterminer son refroidissement rapide jusqu'à ce qu'il soit revenu, à la fin du parcours, à la température ambiante et enfin à recueillir le sang ainsi transformé en phase grumeleuse.

15. Procédé de transformation du sang préalablement transformé en phase grumeleuse humide selon l'un des procédés conforme aux revendications 1 à 14, caractérisé en ce qu'il consiste à soumettre ledit sang en phase grumeleuse humide à une dessication thermique et/ou à l'air libre et/ou sous ventilation jusqu'à obtention d'un produit sec.

16. Sang d'animaux en phase grumeleuse obtenu par le procédé selon l'une des revendications 1 à 12 et 14, caractérisé en ce qu'il se présente sous forme d'une phase ou structure grumeleuse stable et légèrement humide d'apparence analogue à celle du marc de café, de couleur marron foncé, ladite structure grumeleuse étant constituée par un agrégat de nodules de forme irrégulière isolés ou légèrement adhérents entre eux, de dimension millimétrique, eux-mêmes constitués par un agglomérat de granules élémentaires d'apparence sphéroïdale présentant un diamètre de l'ordre de 1 à 5 $\mu$m.

17. Utilisation du sang d'animaux en phase grumeleuse tel qu'il se présente selon la revendication 16, caractérisée en ce que ledit sang ainsi transformé est utilisé à titre d'aliment destiné à l'homme et/ou aux animaux.

18. Sang d'animaux en phase grumeleuse caractérisé en ce qu'en vue de son utilisation selon la revendication 17, il comporte une incorporation d'une ou plusieurs substances présentant un caractère d'adjuvant et/ou d'appétent et/ou de charges adaptées à l'alimentation de l'homme et/ou des animaux.

19. Produit phytosanitaire caractérisé en ce qu'il comporte une incorporation de sang en phase grumeleuse selon la revendication 16.

20. Utilisation du sang d'animaux en phase grumeleuse selon la revendication 16 caractérisée en ce que l'utilisation est effectuée à titre d'engrais.

21. Sang d'animaux en phase grumeleuse caractérisé en ce qu'en vue de son utilisation selon la revendication 20, il comporte une incorporation d'une ou plusieurs substances à caractère d'engrais et/ou d'amendement minéral ou organique adaptées à la formulation d'un engrais, amendement ou substrat agricole ou horticole équilibré.

22. Sang d'animaux en phase grumeleuse, caractérisé en ce qu'en vue de son utilisation selon la revendication 17, il comporte une incorporation d'effluents provenant d'industries agroalimentaires adaptées à la constitution de produits alimentaires.

23. Sang d'animaux en phase grumeleuse selon la revendication 16, caractérisé en ce qu'il comporte une incorporation de substances médicamenteuses en vue de faciliter l'ingestion de celles-ci par les animaux.

24. Sang d'animaux en phase grumeleuse, caractérisé en ce qu'en vue de son utilisation selon la revendication 20, il comporte une incorporation de résidus industriels agricoles ou para-agricoles adaptés à constituer des engrais, amendements ou substrats agricoles ou horticoles.

25. Appareillage pour l'application du procédé selon la revendication 14, caractérisé en ce qu'il

comporte, d'une première part, un réchauffeur à plaques dans lequel est déversé un flux continu de sang à la température initiale, aménagé de manière à porter progressivement ledit flux au voisinage de 60 °C et comportant un orifice d'évacuation par lequel s'échappe le sang ; d'une seconde part, un bac de réception relié à l'orifice d'évacuation ; d'une troisième part, un organe cylindrique allongé et ouvert à ses deux extrémités, présentant une double paroi, disposé en position inclinée de manière que son extrémité inférieure soit immergée au moins partiellement dans le sang contenu dans le bac de réception, ladite double paroi déterminant sur toute la longueur de l'organe cylindrique, au moins une chambre annulaire pourvue de moyens d'admission et d'évacuation pour un fluide de chauffage ; d'une quatrième part, une vis d'Archimède s'étendant à l'intérieur de l'organe cylindrique et sur toute sa longueur, pourvue de moyens d'entraînement en rotation et comportant une double paroi déterminant un espace hélicoïdal muni de moyens d'admission et d'évacuation pour un fluide de chauffage, l'ensemble de l'organe cylindrique et de la vis d'Archimède étant aménagé et la température des fluides de chauffage étant choisie de manière à déterminer l'élévation convenable en température de manière que sa transformation en phase grumeleuse se réalise au moment ou, par le jeu de ladite vis d'Archimède, il atteint l'extrémité supérieure de l'organe cylindrique d'où il s'échappe par gravité et, enfin, d'une cinquième part, une bande transporteuse dont l'une des extrémités est disposée à l'aplomb de ladite extrémité supérieure de l'organe cylindrique de manière à recevoir le sang en phase grumeleuse qui s'en échappe, cette bande étant dimensionnée et aménagée de manière telle que le sang soit revenu sensiblement à la température ambiante au moment où il atteint son extrémité d'évacuation opposée.

26. Appareillage selon la revendication 25, caractérisé en ce que la bande transporteuse est constituée en matière perméable, qu'une trémie de récupération du rendu liquide non incorporé à la phase grumeleuse est aménagée sous ladite bande, ladite trémie étant reliée à un bac de récupération lui-même relié, par une canalisation et des moyens de pompage convenables, au bac de réception du sang en phase liquide de manière que le rendu y soit réintégré.

27. Sang d'animaux préalablement soumis au procédé selon la revendication 15, caractérisé en ce qu'il se présente sous forme d'un produit noirâtre grumeleux et/ou granulé et non pulvérulent.

28. Utilisation du sang d'animaux préalablement desséché selon la revendication 15, caractérisée en ce qu'elle est effectuée à titre de produit alimentaire.

29. Utilisation du sang d'animaux en phase grumeleuse selon la revendication 16, caractérisée en ce qu'elle est effectuée à titre d'additif, en vue de la modification des propriétés rhéologiques des boues, boues de forage, coulis, bétons, mortiers en leur ajoutant le sang coagulé en phase grumeleuse.

30. Procédé selon la revendication 29, caractérisé en ce que la proportion de sang ajouté est comprise entre 0,5 % et 2 % en poids.

31. Utilisation du sang d'animaux en phase grumeleuse selon la revendication 16, caractérisée en ce qu'elle est effectuée à titre d'additif de cuisson en vue de la modification des propriétés physiques, notamment de densité et/ou de porosité de boues, pâtes pour produits réfractaires, mortiers ou bétons en leur ajoutant avant ladite cuisson le sang coagulé en phase grumeleuse.

32. Boues, boues de forage, coulis, bétons ou mortiers, caractérisés en ce que leurs propriétés rhéologiques ont été modifiées par application de l'utilisation du sang d'animaux selon la revendication 29.

33. Produits industriels nouveaux constitués par des boues, pâtes pour produits réfractaires, mortiers ou bétons soumis à la cuisson, caractérisés en ce que leurs propriétés physiques notamment de densité et/ou de porosité ont été modifiées par application de l'utilisation du sang d'animaux selon la revendication 31.

34. Mortiers, bétons ou similaires caractérisés en ce que, après application de l'utilisation du sang d'animaux selon la revendication 29 et solidification, la pâte de ciment qu'ils comportent présente des micro-cavités de l'ordre de 1 à 5/100 de millimètre de diamètre.

**Claims**

1. Method of modifying the physical and biochemical characteristics of animal blood after slaughter or of the serum or plasma thereof after separation, characterized in that it consists of heating the blood in the liquid state before coagulation, or the serum or plasma thereof after separation, mass heating being performed, the said mass of blood or plasma or serum (hereinafter designated by the common name « blood ») being stirred continuously and slowly in such a way that the fibrinogen of the blood is not transformed into fibrin, the heating operation thus defined being continued progressively to a temperature which substantially corresponds to the boiling temperature at which the blood is then in the form of a stable and slightly moist grumous phase, with the essentially total disappearance of any liquid phase, with the exception of a slight yield of liquid, the weight of which, added to the loss resulting from the evaporation, does not determine a total loss of more than 5 %.

2. Method as claimed in claim 1, characterized in that it consists of adding to the blood, as soon as bleeding occurs, an anticoagulant agent, possibly associated with an acid, a base or a salt, with the aim of activating chelation, and subsequently subjecting the blood thus temporarily preserved in the liquid phase to the treatment according to claim 1.

3. Method as claimed in one of claims 1 or 2, characterized in that it consists of adding to the blood, as soon as bleeding occurs, a bactericidal and/or bacterial proliferation retarding agent.

4. Method as claimed in claim 3, characterized in that both the anticoagulant agent and the bactericidal agent are formed by ethylenediamine tetra-acetic acid (EDTA).

5. Method as claimed in one of claims 3 or 4, characterized in that the anticoagulant agent and the bactericidal agent are both formed by one of the EDTA base derivatives.

6. Method as claimed in claim 5, characterized in that the EDTA base derivative is formed at least partially by disodium EDTA ($Na_2$ EDTA).

7. Method as claimed in claim 5, characterized in that the EDTA base derivative is formed at least partially by monocalcium disodium EDTA ($CaNa_2$ EDTA).

8. Method as claimed in claims 6 and 7, characterized in that the EDTA derivative is formed by an association of $Na_2$ EDTA and $CaNa_2$ EDTA.

9. Method as claimed in one of claims 1 to 8, characterized in that immediately after attaining the grumous consistency the blood thus treated is subjected to rapid cooling suitable for completely preventing the beginning of bacterial proliferation.

10. Method as claimed in claim 9, characterized in that cooling is achieved by pouring the blood thus treated onto a conveyer belt such that it is spread thereon in a thin layer, the length of the belt being such that at its opposite end the treated blood is substantially returned to ambient temperature.

11. Method as claimed in claim 1, characterized in that the liquid yield is incorporated in the liquid blood of a subsequent operation of the same type.

12. Method as claimed in one of claims 1 to 11, characterized in that after the grumous phase has been obtained the latter is subjected to a subsequent sterilizing treatment performed in an autoclave.

13. Method for enriching the blood transformed into a grumous phase according to one of claims 1 to 12, consisting of either coagulating or centrifuging an additional volume of this liquid, grinding the clot or the mass of globules and platelets thus obtained, then incorporating the ground mass thus obtained in anticoagulated blood and finally subjecting the latter to the heat treatment for obtaining the grumous phase.

14. Method for transforming animal blood into a grumous phase by the action of heat as claimed in one of claims 1 to 13, characterized in that it consists of circulating a continuous flow of the said blood, initially in the liquid phase, along a suitable determined path, determining the progressive increase in its temperature along the said path until it is close to the boiling temperature, maintaining it in the slowly agitated state until it has reached the temperature at which it acquires a grumous consistency, and subsequently determining the rapid cooling theoreof, until, at the end of the path it has returned to ambient temperature, and finally in collecting the blood thus transformed into the grumous phase.

15. Method for transforming blood previously transformed into the moist grumous phase as claimed in one of the methods according to claims 1 to 14, characterized in that it consists of subjecting the said blood in the moist grumous phase to a heat dessication process and/or a dessication process in the open air and/or under ventilation until a dry product is obtained.

16. Animal blood in a grumous phase obtained by the methods as claimed in one of claims 1 to 12 and 14, characterized in that it is in the form of a stable and slightly moist grumous phase or structure with an appearance similar to that of coffee grounds, dark brown in colour, the said grumous structure being formed by an aggregate of irregularly shaped nodules which are separate from one another or slightly adherent with respect to one another, have millimetric dimensions and themselves are formed by an agglomerate of elementary granules having a spherical appearance and a diameter of the order of 1 to 5 $\mu m$.

17. Use of animal blood in the grumous phase as it presents itself according to claim 16, characterized in that the said blood transformed in this manner is used as a food for humans and/or animals.

18. Animal blood in the grumous phase characterized in that, for its use according to claim 17, there is incorporated therein one or more substances having the nature of an additive and/or of an appetizer and/or of a filler suitable for feeding humans and/or animals.

19. Phytosanitary product characterized in that there is incorporated therein blood in the grumous phase as claimed in claim 16.

20. Use of animal blood in the grumous phase as claimed in claim 16, characterized in that it is used as a fertilizer.

21. Animal blood in the grumous phase characterized in that for the use thereof as claimed in claim 20 there is incorporated therein one or more substances with a fertilizing and/or mineral or organic enrichment nature suitable for the preparation of a balanced agricultural or horticultural fertilizer, enriching agent or substrate.

22. Animal blood in the grumous phase, characterized in that for the use thereof according to claim 17, there are incorporated therein waste products from agricultural foodstuffs industries suitable for constituting food products.

23. Animal blood in the grumous phase as claimed in claim 16, characterized in that there are incorporated therein medicinal substances in order to facilitate the ingestion thereof by animals.

24. Animal blood in the grumous phase, characterized in that for the use thereof as claimed in

claim 20 there is incorporated therein agricultural or para-agricultural industrial waste suitable for constituting agricultural or horticultural fertilizers, enriching agents or substrates.

25. Equipment for the application of the method as claimed in claim 14, characterized in that it firstly comprises a plate reheater into which there is poured a continuous flow of blood at the initial temperature, the reheater being arranged such that it progressively brings the flow to approximately 60 °C and comprising a discharge aperture *via* which the blood is discharged ; secondly comprising a collecting tank connected to the discharge aperture ; thirdly, an elongate cylindrical member which is open at both ends, has a double wall and is arranged in an inclined position such that its lower end is at least partially immersed in the blood contained in the collecting tank, the said double wall defining, over the entire length of the cylindrical member, at least one annular chamber provided with means for admitting and evacuating a heating fluid ; fourthly, an Archimedian screw extending into the interior of the cylindrical member and, over the entire length thereof, provided with rotational drive means and comprising a double wall defining a helical space equipped with means for admitting and evacuating a heating fluid, the assembly of the cylindrical member and the Archimedian screw being arranged and the temperature of the heating fluids being selected so as to determine suitably the increase in temperature such that its transformation to the grumous phase occurs at the moment when, owing to the play of the said Archimedian screw, it reaches the upper end of the cylindrical member from where it is discharged by gravity and, finally, fifthly comprising a conveyer belt, one end of which is arranged perpendicular to the said upper end of the cylindrical member so as to receive the blood in the grumous phase being discharged therefrom, this belt being dimensioned and arranged such that the blood is substantially returned to ambient temperature at the moment when it reaches the opposite evacuation end of the belt.

26. Equipment as claimed in claim 25, characterized in that the conveyer belt is made from a permeable material, in that a hopper for recovering the liquid yield not incorporated in the grumous phase is arranged below the said belt, the said hopper being connected to a recovery tank which, in turn, is connected, *via* a pipe system and suitable pumping means, to the tank for collecting the blood in the liquid phase such that the yield is reintegrated therein.

27. Animal blood previously subjected to the method as claimed in claim 15, characterized in that it is in the form of a grumous, blackish and/or granulated and not pulverulent product.

28. Use of animal blood previously dried as claimed in claim 15, characterized in that it is used as a food product.

29. Use of animal blood in the grumous phase as claimed in claim 16, characterized in that it is used as an additive in order to midify the rheological properties of sediments, drilling sediments, fillings, concretes, mortars by adding the coagulated blood in the grumous phase thereto.

30. Method as claimed in claim 29, characterized in that the proportion of blood added is between 0.5 % and 2 % by weight.

31. Use of animal blood in the grumous phase as claimed in claim 16, characterized in that it is used as a firing additive in order to modify the physical properties, in particular the density and/or porosity of sediments, pastes for refractory products, mortars or concretes by adding the coagulated blood in the grumous phase thereto before the said firing.

32. Sediments, drilling sediments, fillings, concretes or motars, characterized in that their rheological properties have been modified by the application of the use of animal blood as claimed in claim 29.

33. Novel industrial products constituted by sediments, pastes for refractory products, mortars or concretes subjected to firing, characterized in that their physical properties, in particular density and/or porosity have been modified by the application of the use of animal blood as claimed in claim 31.

34. Mortars, concretes or the like characterized in that, after the application of the use of animal blood as claimed in claim 29 and solidification, the cement paste which they comprise has micro-cavities of the order of 1 to 5/100 millimetres diameter.

**Ansprüche**

1. Verfahren zur Modifikation der Physikalischen und biochemischen Charakteristiken von tierischem Blut nach dem Schlachten oder von Serum oder von Plasma davon nach der Abtrennung, dadurch gekennzeichnet, daß man das Blut in flüssigem Zustand vor der Koagulation oder sein Plasma oder Serum nach der Abtrennung erhizt, wobei das Erhitzen in Massen durchgeführt wird durch kontinuierliches und langsames Bewegen dieser Blutmassen oder des Plasmas oder des Serums (nachfolgend als « Blut » bezeichnet) auf eine solche Weise, daß das Fibrinogen des Blutes nicht in Fibrin übergeführt wird und wobei die Operation des so definierten Erhitzens auf eine progressive Weise bis auf eine Temperatur fortgesetzt wird, die merklich der Siedetemperatur entspricht, bei welcher sich das Blut dann präsentiert in der Form einer klumpigen, stabilen und leicht feuchten Masse, mit merklich völligem Verschwinden der gesamten flüssigen Phase, unter Ausnahme eines flüssigen Anteils von geringer Wichtigkeit, dessen Gewicht, zuzüglich dem aus der Verdampfung resultierenden Verlust, einen Gesamtverlust von höchsten 5 % ausmacht.

2. Verfahren nach Anspruch 1, dadurch gekennzeichnet, daß man dem Blut gleich nach seiner Entnahme ein Antikoagulationsmittel, gegebenenfalls in Verbindungen mit einer Säure, einer Base oder einem Salz — in der Absicht, eine Komplexbildung zu aktivieren —, hinzufügt, und daß man dann das so

in flüssiger Phase provisorisch konservierte Blut danach der Behandlung gemäß Anspruch 1 unterwirft.

3. Verfahren nach Anspruch 1 oder 2, dadurch gekennzeichnet, daß man dem Blut gleich nach seiner Entnahme ein Bakterizid und/oder ein Mittel zur Verzögerung der Bakterienvermehrung hinzufügt.

4. Verfahren nach Anspruch 3, dadurch gekennzeichnet, daß das Antikoagulationsmittel und das Bakterizidemittel gleichzeitig Ethylendiamintetraessigsäure (EDTA) ist.

5. Verfahren nach Anspruch 3 oder 4, dadurch gekennzeichnet, daß das Antikoagulationsmittel und das Bakterizid beide aus einem der basischen Derivate von EDTA bestehen.

6. Verfahren nach Anspruch 5, dadurch gekennzeichnet, daß das basische Derivat von EDTA zumindest teilweise das Dinatriumsalz von EDTA (EDTA $Na_2$) ist.

7. Verfahren nach Anspruch 5, dadurch gekennzeichnet, daß das basische Derivat von EDTA zumindest teilweise das Dinatrium-Monocalcium-Salz von EDTA (EDTA $CaNa_2$) ist.

8. Verfahren nach Anspruch 6 oder 7, dadurch gekennzeichnet, daß das Derivat von EDTA eine Vereinigung von EDTA $Na_2$ und EDTA $CaNa_2$ ist.

9. Verfahren nach einem der Ansprüche 1 bis 8, dadurch gekennzeichnet, daß das so behandelte Blut sogleich nach Annahme der klumpigen Konsistenz einer raschen Abkühlung unterworfen wird, die geeignet ist, den Beginn einer Bakterienvermehrung zu vermeiden.

10. Verfahren nach Anspruch 9, dadurch gekennzeichnet, daß die Abkühlung erreicht wird durch Verteilen des behandelten Blutes auf einem Transportband in der Weise, daß es in dünner Schicht ausgebreitet wird, wobei die Länge des Bandes so bemessen ist, daß an seinem entgegengesetzten Ende das behandelte Blut merklich Umgebungstemperatur angenommen hat.

11. Verfahren nach Anspruch 1, dadurch gekennzeichnet, daß der flüssige Anteil dem flüssigen Blut einer späteren Operation derselben Art einverleibt wird.

12. Verfahren nach einem der Ansprüche 1 bis 11, dadurch gekennzeichnet, daß nach Erhalt der klumpigen Phase dieselbe einer ergänzenden Sterilisationsbehandlung in einem Autoklaven unterworfen wird.

13. Verfahren zur Anreicherung von in die klumpige Phase übergeführtem Blut nach einem der Ansprüche 1 bis 12, gekennzeichnet durch entweder Koagulieren oder Zentrifugieren eines zusätzlichen Volumens dieser Flüssigkeit, Zerreiben des so erhaltenen Blutgerinnsels oder der Masse von Blutkörperchen und -plättchen, dann Inkorporieren des so erhaltenen zerriebenen dem antikoagulierten Blut und endlich Unterwerfen desselben einer thermischen Behandlung zur überführung in die klumpige Phase.

14. Verfahren zum Überführen von Tierblut in die krumpelige Phase durch Wärmeeinwirkung nach einem der Ansprüche 1 bis 13, dadurch gekennzeichnet, daß man einen kontinuierlichen Fluß des Blutes, anfangs in der flüssigen Phase, zirkulieren läßt auf einem bestimmten Parcours, der dazu eingerichtet ist, seinen progressiven Temperaturanstieg über die Länge dieses Parcours bis in die Nähe der Siedetemperatur herbeizuführen, ihn im Zustand des langsamen Bewegens zu halten, bis er diese Temperatur angenommen hat, bei welcher er eine krumpelige Konsistenz annimmt, dann seine rasche Abkühlung zu erreichen, bis er am Ende des Parcours zur Umgebungstemperatur zurückgekehrt ist und schließlich einsammeln des so in die krumpelige Phase übergeführten Blutes.

15. Verfahren zur Umwandlung des vorher in die klumpige, feuchte Phase übergeführten Blutes nach einem der Verfahren gemäß den Ansprüchen 1 bis 14, dadurch gekennzeichnet, daß man das in der krumpeligen, feuchten Phase befindliche Blut einer thermischen Trocknung und/oder der freien Luft und/oder einer Ventilierung bis zum Erhalt eines trockenen Produktes unterwirft.

16. Tierblut in klumpiger Phase, erhalten nach dem Verfahren gemäß einem der Ansprüche 1 bis 12 und 14, dadurch gekennzeichnet, daß es sich in der Form einer Phase oder Struktur präsentiert, die krumpelig, stabil und leicht feucht ist, die analog aussieht wie Kaffeesatz, die eine dunkelbraune Farbe hat, wobei diese krumpelige Struktur durch ein Aggregat von unregelmäßig geformten Knöllchen gebildet wird, wobei die Knöllchen isoliert sind oder leicht untereinander zusammenhängen, in der Dimension des Millimeterbereichs, untereinander konstituiert durch ein Agglomerat von elementaren Körnern mit einem kugelförmigen Aussehen und mit einem Durchmesser in der Größenordnung von 5 $\mu$m.

17. Verwendung von Tierblut in der klumpigen Phase gemäß Anspruch 16, dadurch gekennzeichnet, daß das so umgewandelte Blut als Nahrungsmittel für Mensch und/oder Tier verwendet wird.

18. Tierblut in der klumpigen Phase, dadurch gekennzeichnet, daß es in Anbetracht seiner Verwendung gemäß Anspruch 17 eine oder mehrere Substanzen einverleibt enthält, die den Charakter eines Hilfsstoffs und/oder eines appetitanregenden Mittels und/oder von Inhaltsstoffen, die zur Ernährung von Mensch und/oder Tier angepaßt sind, haben.

19. Phytosanitäres Produkt, dadurch gekennzeichnet, daß es Blut in krumpeliger Phase gemäß Anspruch 16 einverleibt enthält.

20. Verwendung von Tierblut in krumpeliger Phase nach Anspruch 16, dadurch gekennzeichnet, daß es als Düngemittel verwendet wird.

21. Tierblut in krumpeliger Phase, dadurch gekennzeichnet, daß es in Hinblick auf seine Verwendung gemäß Anspruch 20 eine oder mehrere Substanzen einverleibt enthält, die die Eigenschaften eines Düngemittels und/oder von mineralischen oder organischen Hilfsstoffen haben zur Formulierung eines Düngemittels, Hilfsstoffs oder ausgeglichenen Substrats für die Landwirtschaft oder den Gartenbau.

22. Tierblut in krumpeliger Phase, dadurch gekennzeichnet, daß es in Anbetracht seiner Verwendung gemäß Anspruch 17 eine Einverleibung von Nebenprodukten enthält, die aus Landwirtschafts- oder Nahrungsmittelindustrien stammen und die als bestandteile von Nahrungsmittelprodukten geeignet sind.

23. Tierblut in krumpeliger Phase gemäß Anspruch 16, dadurch gekennzeichnet, daß es eine pharmazeutische Substanz einverleibt enthält mit dem Zweck, dadurch das Einnehmen derselben durch die Tiere zu erleichtern.

24. Tierblut in krumpeliger Phase, dadurch gekennzeichnet, daß es in Anbetracht seiner Verwendung gemäß Anspruch 20, landwirtschaftliche oder paralandwirtschaftliche, industrielle Rückstände einverleibt enthält, die als Bestandteile für Düngemittel, Hilfsmittel oder Substrate in der Landwirtschaft oder im Gartenbau geeignet sind.

25. Vorrichtung zur Durchführung des Verfahrens nach Anspruch 14, gekennzeichnet durch einen ersten Teil, einen Plattenvorwärmer, in welchem ein kontinuierlicher Blutstrom von Anfangstemperatur abfließen gelassen wird, eingerichtet für eine progressive Temperaturerhöhung dieses Blutstromes bis in die Nähe von 60 °C und bestehend aus einer Abflußöffnung, durch welche das Blut ausströmt, einen zweiten Teil, einen Aufnahmetrog, der sich an die Abflußöffnung anschließt, einen dritten Teil, ein zylindrisches Organ, das länglich und an seinen zwei äußersten Enden offen ist, das eine doppelte Wand darstellt, das in der Weise geneigt ist, daß sein niedriger gelegenes äußerstes Ende wenigstens teilweise in das in dem Aufnahmetrog befindliche Blut eintaucht, wobei die Doppelwand sich über die ganze Länge des zylindrischen Organs erstreckt, wenigstens eine ringförmige Kammer versehen mit Einrichtungen zum Einführen und Ausführen einer Heizflüssigkeit, einen vierten Teil, eine archimedische Spirale oder Schnecke, die sich im Innern des zylindrischen Organs und über seine ganze Länge erstreckt, versehen mit Rotationsantriebsmitteln und enthaltend eine Doppelwand, die einen schraubenförmigen, mit Ein- und Auslaßöffnungen für eine Heizflüssigkeit versehenen Raum bestimmt, wobei sie zusammen mit dem zylindrischen Organ und mit der archimedischen Spirale angeordnet ist und wobei die Temperatur der Heizflüssigkeit in der Weise gewählt wird, daß ein geeigneter Temperaturanstieg in der Weise bestimmt wird, daß die Überführung in die krumpelige Phase in dem Moment eintritt, zu dem es infolge der archimedischen Spirale das höher gelegene äußerste Ende des zylindrischen Organs erreicht, von wo sie aufgrund der Schwerkraft entweicht, und schließlich einen fünften Teil, ein Transportband, dessen eines äußerstes Ende anschließend an das obere Ende des zylindrischen Organs in der Weise angeordnet ist, daß es das in der klumpigen Phase herauskommende Blut aufnimmt, wobei dieses Band in der Weise dimensioniert und gestaltet ist, daß das Blut im wesentlichen Umgebungstemperatur in dem Moment angenommen hat, zu dem es sein gegenüberligendes Ende der Entleerung erreicht hat.

26. Vorrichtung nach Anspruch 25, dadurch gekennzeichnet, daß das Transportband aus einem durchlässigen Material besteht und daß eine Rinne zur Rückgewinnung des flüssigen Anteils, der nicht in die krumpelige Phase einverleibt ist, unter dem Band eingerichtet ist, wobei die Rinne sich an einen Rückgewinnungstrog anschließt, der sich seinerseits über eine kanalisation und geeignete Pumpen an den Trog zur Aufnahme des Blutes in flüssiger Phase in der Weise anschließt, daß dieser Anteil dort reintegriert wird.

27. Tierblut, das vorher dem Verfharen gemäß Anspruch 15 unterworfen worden ist, dadurch gekennzeichnet, daß es sich präsentiert in der Form eines schwärzlichen klumpigen Produkts und/oder Granulates und nicht pulverförmig.

28. Verwendung von gemäß Anspruch 15 vorbehandeltem Tierblut, dadurch gekennzeichnet, daß man es als Nahrungsmittelprodukt einsetzt.

29. Verwendung von Tierblut in klumpiger Phase gemäß Anspruch 16, dadurch gekennzeichnet, daß man es als Additiv einsetzt zur Modifikation der reologischen Eigenschaften von Schlämmen, Bohrschlämmen, Zementmörtel, Beton und Mörtel durch jeweiliges Hinzufügen von koaguliertem Blut in der klumpigen Phase.

30. Verfahren nach Anspruch 29, dadurch gekennzeichnet, daß das Verhältnis des hinzugefügten Blutes zwischen 0,5 und 2 Gew.-% beträgt.

31. Verwendung von Tierblut in der klumpigen Phase nach Anspruch 16, dadurch gekennzeichnet, daß man es als Garungsadditiv einsetzt zur Modifizierung der physikalischen Eigenschaften, insbesondere der Dichte und/oder der Porosität von Schlämmen, Pasten für feuerfeste Produkte, Mörtel oder Beton durch jeweiliges Hinzufügen von koaguliertem Blut in der klumpigen Phase vor der besagten Garung.

32. Schlämme, Bohrschlämme, Zementmörtel, Beton oder Mörtel, dadurch gekennzeichnet, daß sie in ihren reologischen Eigenschaften modifiziert worden sind durch Anwendung der Verwendung von Tierblut nach Anspruch 29.

33. Neue industrielle Produkte, bestehend aus Schlämmen, Pasten für feuerfeste Produkte, Mörtel oder Beton, die einer Garung unterworfen worden sind, dadurch gekennzeichnet, daß ihre physikalischen Eigenschaften, insbesondere die Dichte und/oder die Porosität, modifiziert worden sind durch Anwendung der Verwendung von Tierblut nach Anspruch 31.

34. Mörtel, Beton oder ähnliches, dadurch gekennzeichnet, daß nach der Anwendung der Verwendung von Tierblut nach Anspruch 29 und der Verfestigung die Zementmasse, die sie enthalten, Mikrohöhlungen in der Größenordnung von 1 bis 5/100 Millimeter Durchmesser aufweisen.

Fig.1

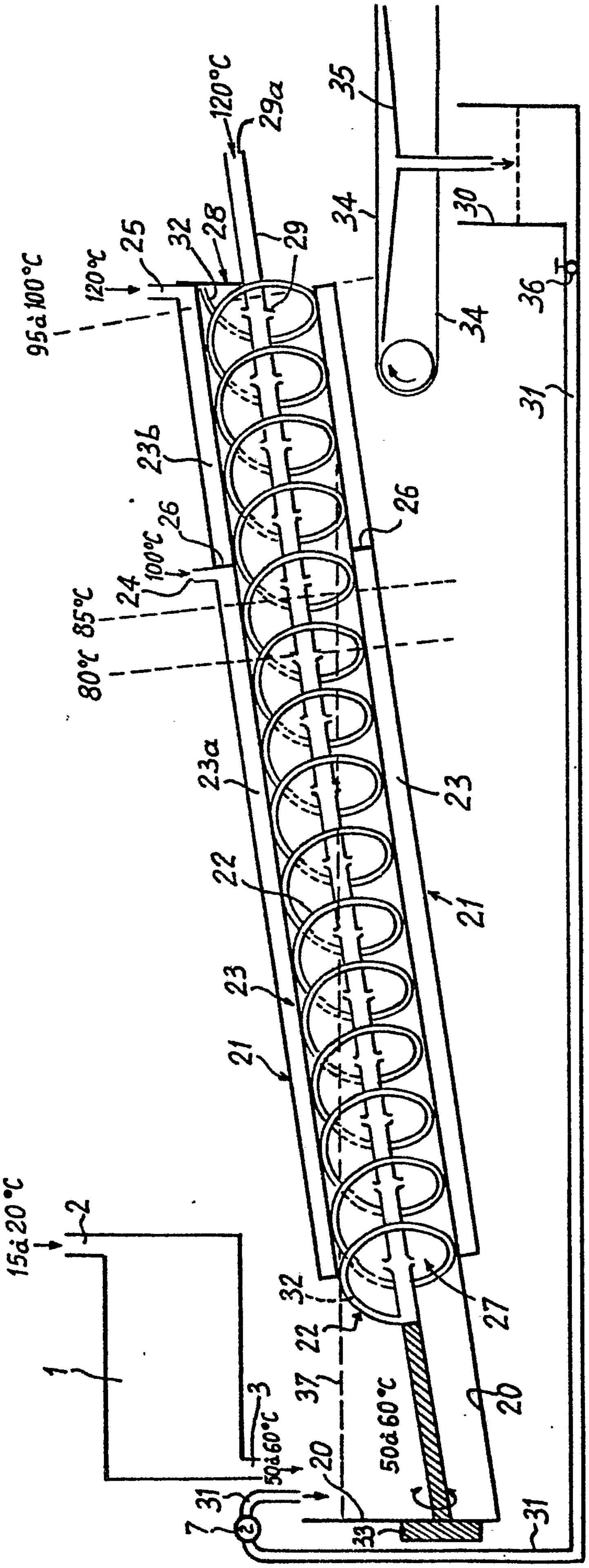
15à20°C
2
1
3
50à60°C
7
31
20
33
37
22
32
27
50à60°C
21
23
22
23a
23
80°C
85°C
24
100°C
26
23b
95à100°C
120°C
25
32
28
29
120°C
29a
35
34
34
30
36
31

Fig. 2

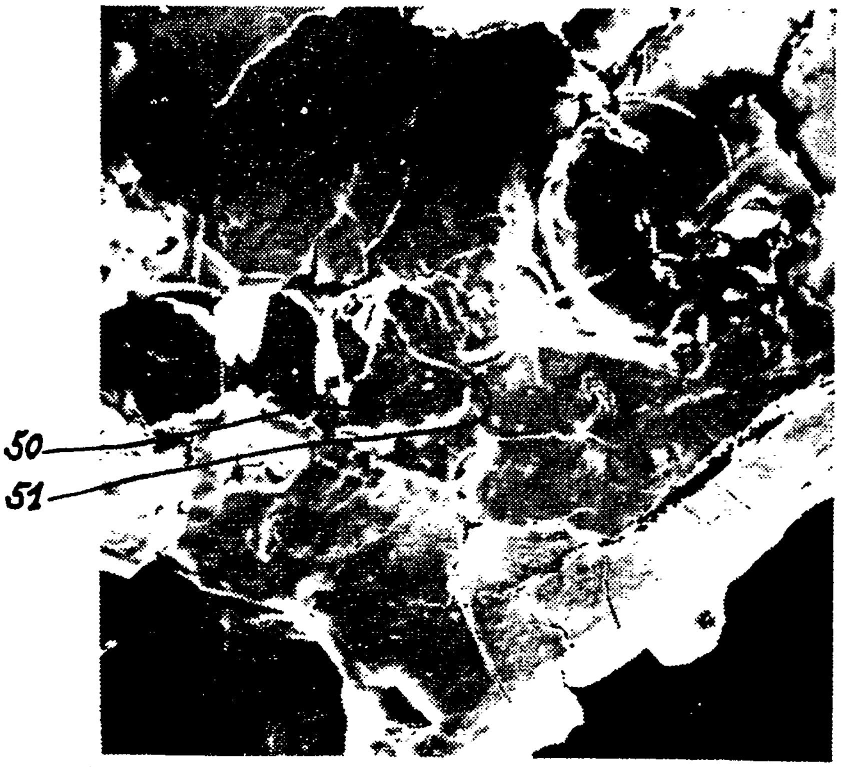

50

51

Fig. 3

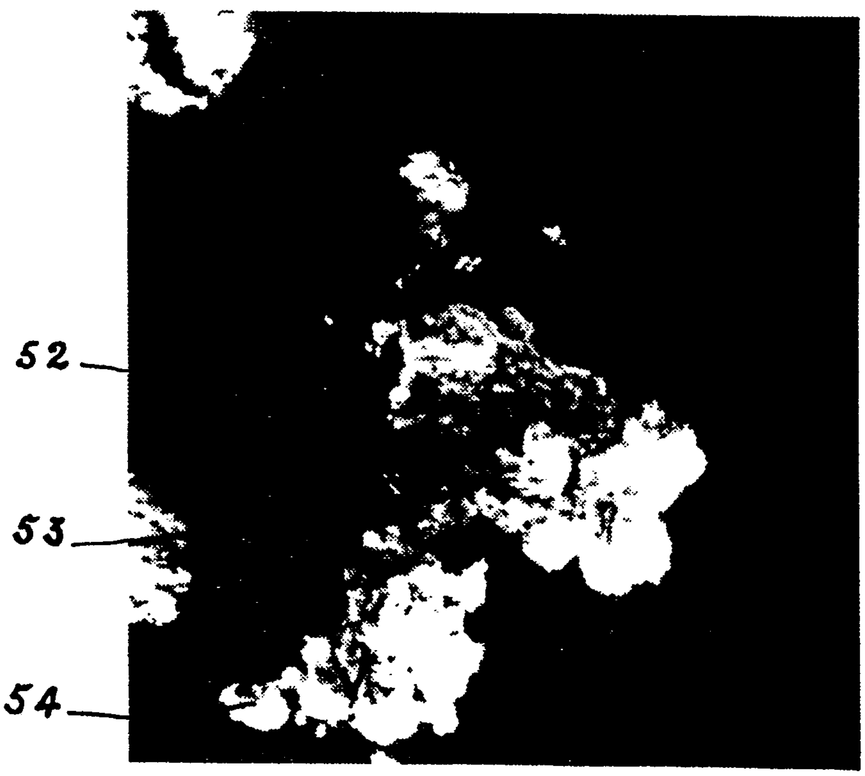

52

53

54

51
50
55

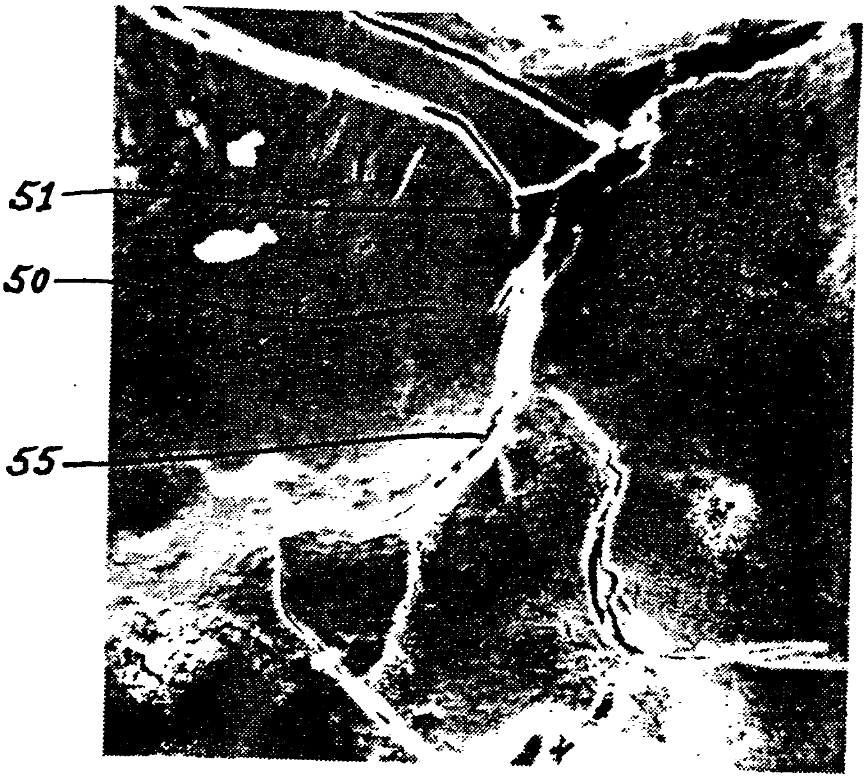

FIG. 4

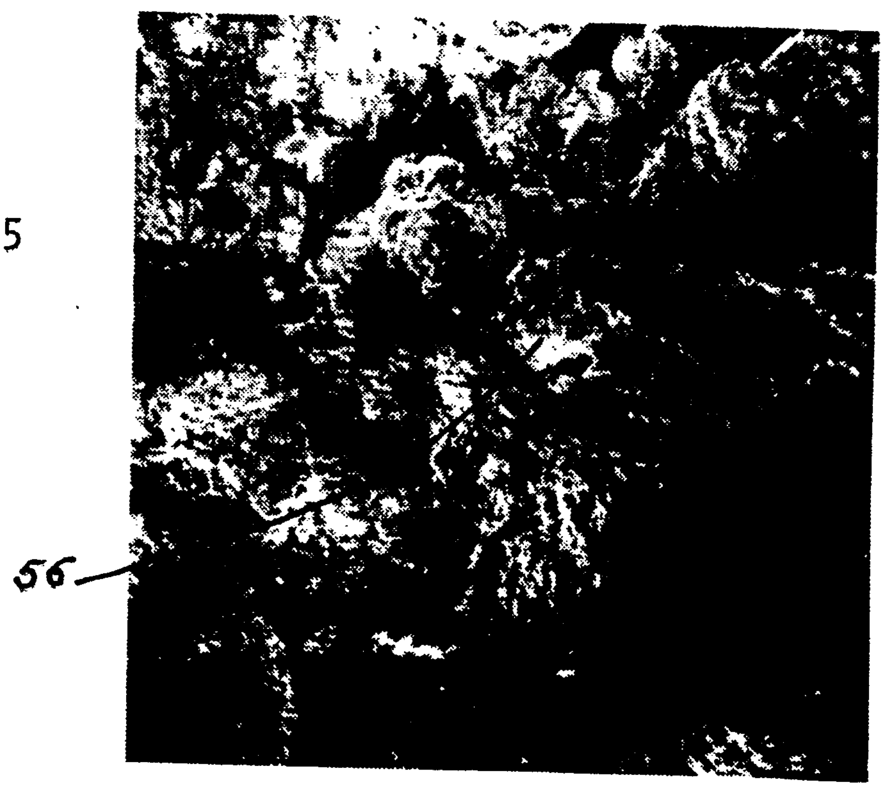

FIG. 5

56

FIG. 6

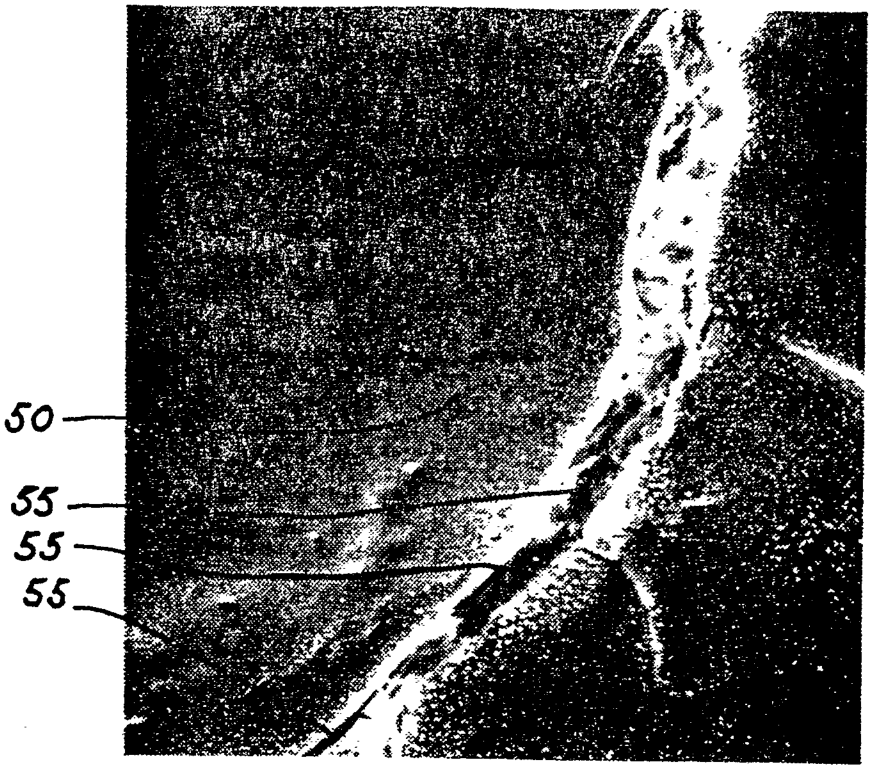


FIG. 7

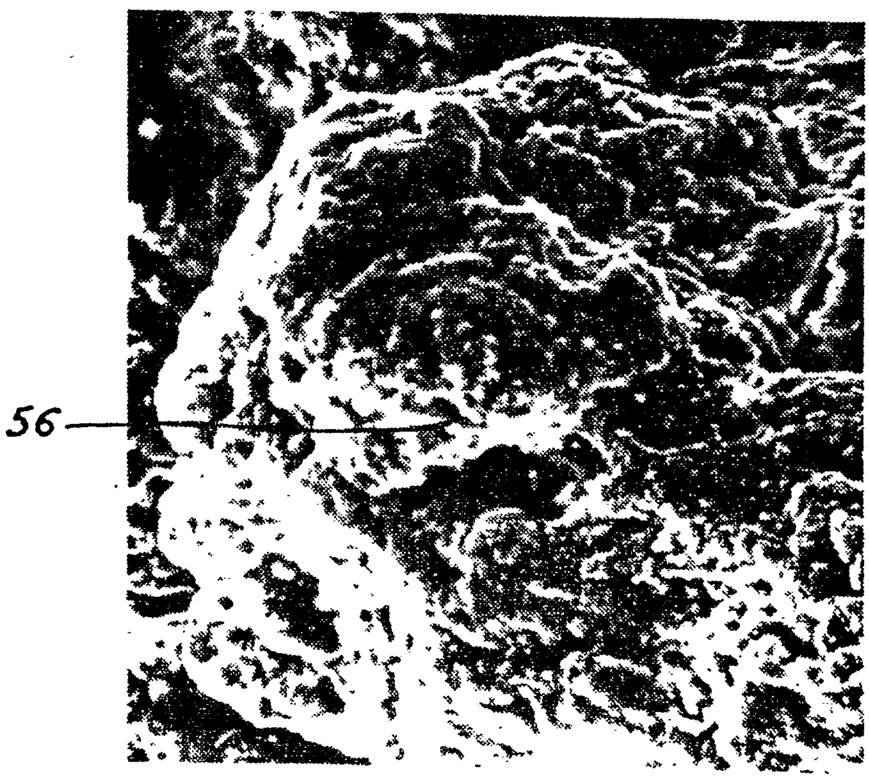

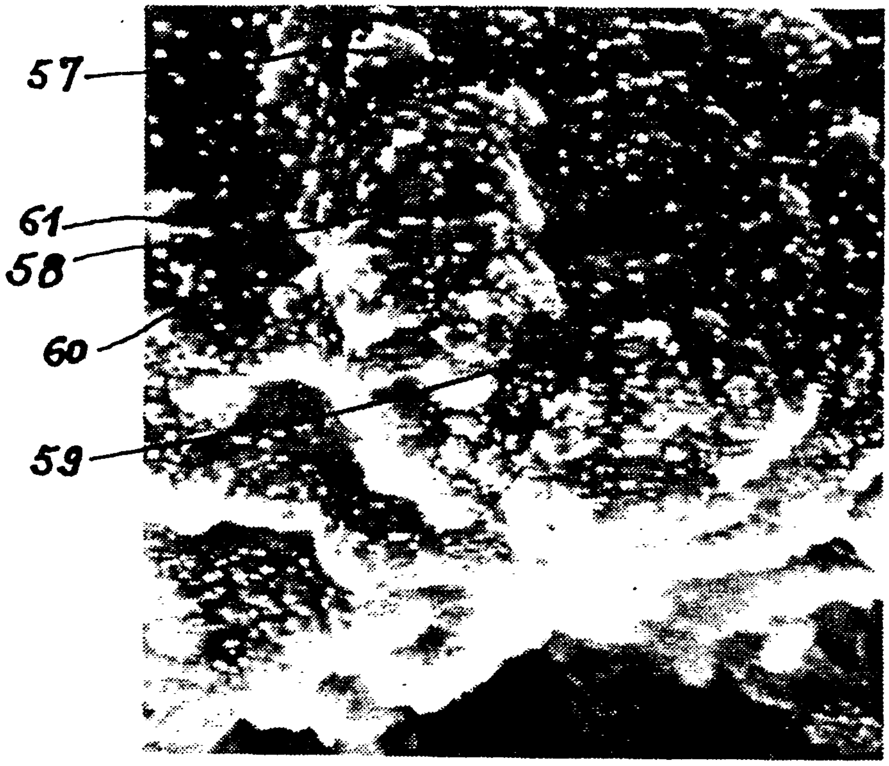
57
61
58
60
59

FIG. 8

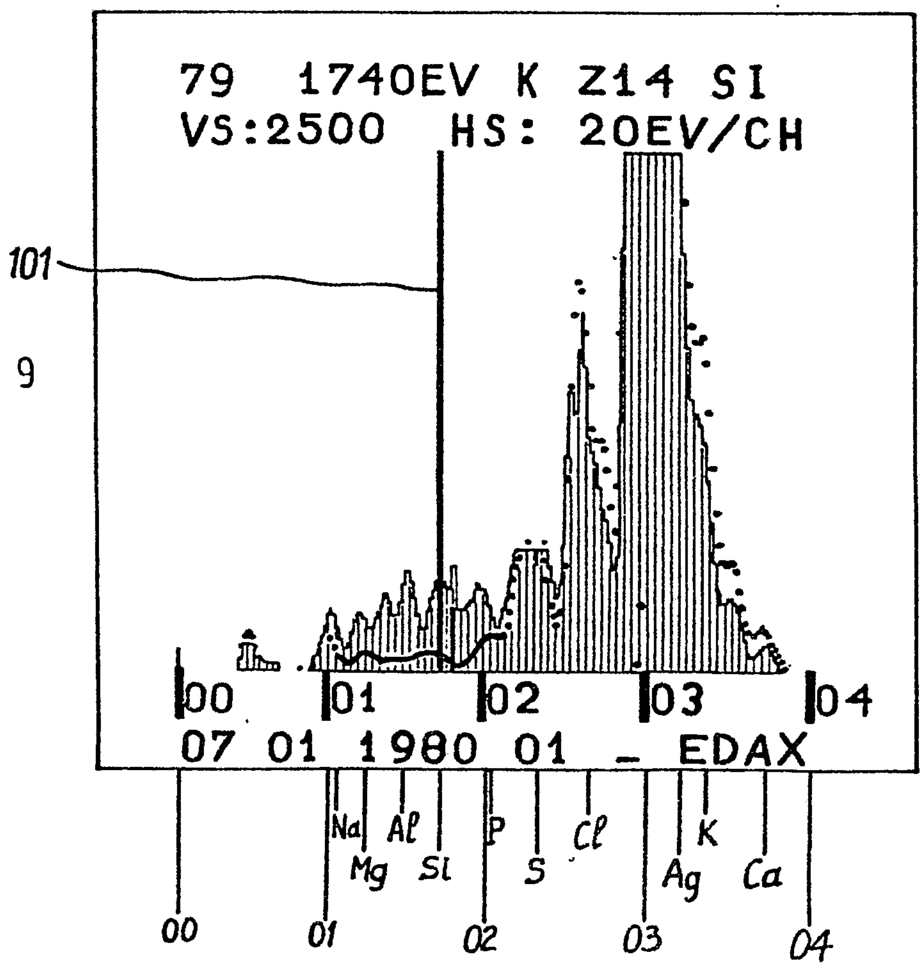
79 1740EV K Z14 SI
VS:2500 HS: 20EV/CH
101
00
01
02
03
04
07 01 1980 01 _ EDAX
Na
Mg
Al
Si
P
S
Cl
Ag
K
Ca
00
01
02
03
04

FIG. 9

Fig:10

COURBES DES VITESSES DE PRISE

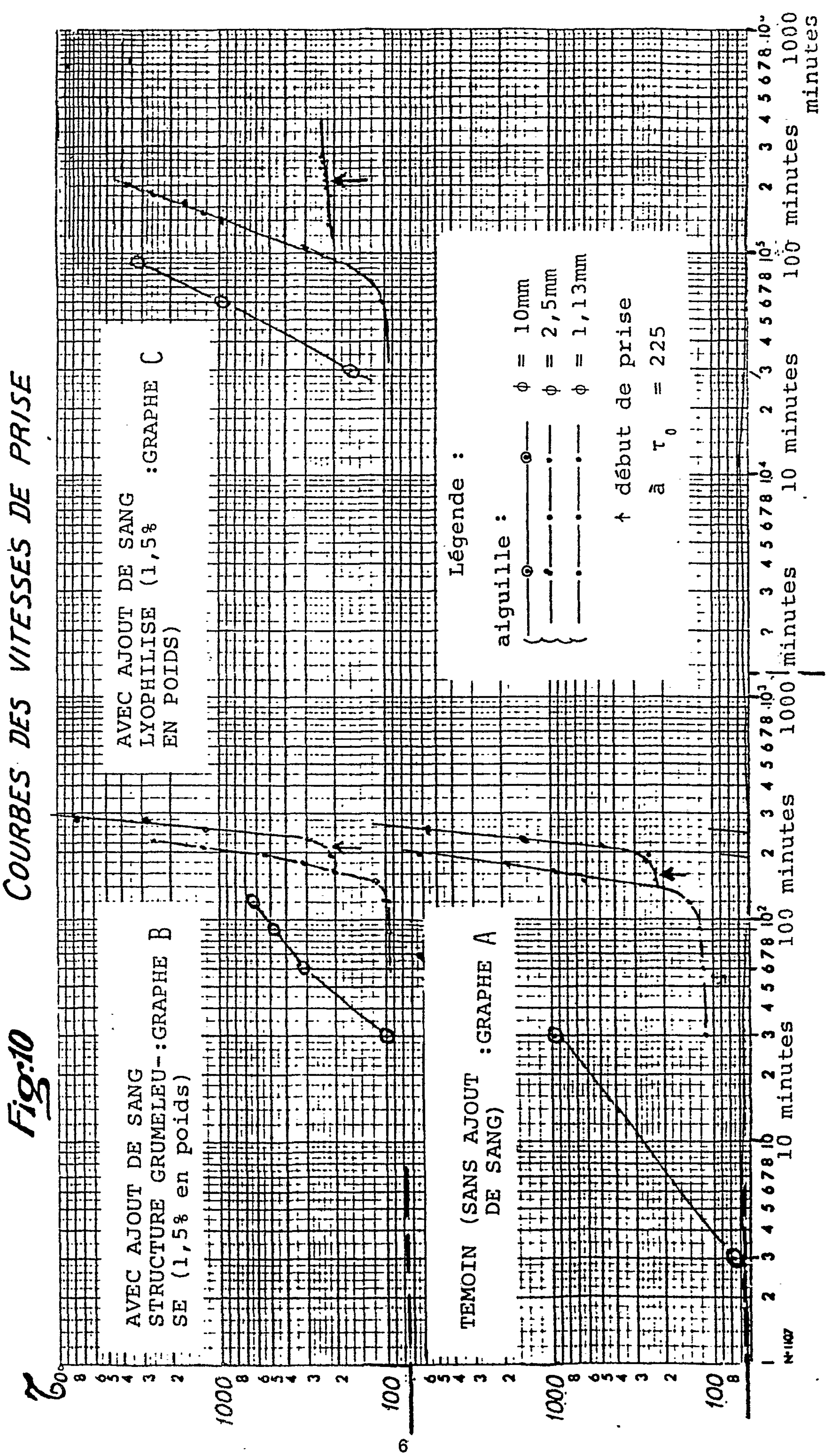

- FIG. 11 -

COMPARAISON DES VITESSES DE PRISE ET DES ESSAIS DE FENDAGE ENTRE DES ÉPROUVETTES CONFECTIONNÉES AVEC DU SANG GRUMELEUX, ET AVEC DU SANG LYOPHILISÉ ET L'ÉPROUVETTE TEMOIN.

( $\frac{Eau}{Ciment}$ = 0,264 - Ciment C P A 500 - température 16°C. )

| Eprouvettes | Enfoncement grosse aiguille à 3 minutes (en mm) | Début de prise (en minutes) à $\tau_0$ = 225 | $\sigma'_{Br}$ (à 7 jours) (en daN/$cm^2$) (déca-Newton /$cm^2$) | $\sigma'$ (à 7 jours) | Observations des ruptures |
|---|---|---|---|---|---|
| Témoin | 13,5 | 160' (courbes A) | 19,95 | 15,96 | parfaite |
| 1,5% lyophilisé | 19,5 | 210' (courbes C) | 31,07 | 24,86 | parfaite |
| 1,5% grumeleux | 25,5 | 210' (courbes B) | 37,32 | 29,86 | parfaite |